# NOUVEAU FASCICULE DE BREVET EUROPEEN

(11) **EP 1 765 590 B2**
(45) Date de publication et mention de la décision concernant l'opposition: **29.03.2023**
(45) Mention de la délivrance du brevet: 25.01.2012
(21) Numéro de dépôt: 05775238.8
(22) Date de dépôt: 08.06.2005
(51) Int. Cl.: B32B 27/34, C08K 5/20, B29C 45/16

(54) **STRUCTURE MULTICOUCHE A BASE DE POLYAMIDE POUR RECOUVRIR DES SUBSTRATS**
MEHRSCHICHTIGE STRUKTUR AUF POLYAMIDBASIS ZUM ABDECKEN VON SUBSTRATEN
POLYAMIDE-BASED MULTI-LAYER STRUCTURE WHICH IS USED TO COVER SUBSTRATES

(30) Priorité: 22.06.2004 FR 0406756
(43) Date de publication de la demande: 28.03.2007
(73) Titulaire: ARKEMA FRANCE, 92700 Colombes (FR)
(72) Inventeur: MONTANARI, Thibault, F-27300 Menneval (FR); LACROIX, Christophe, F-78124 Mareil sur Mauldre (FR); SILAGY, David, F-27000 Evreux (FR); MAUFFREY, Jocelyn, F-27410 Beaumesnil (FR); BAUMERT, Martin, F-27470 Serquigni (FR); KERVENNAL, Roparz, F-29100 Douarnenez (FR)
(74) Mandataire: Bandpay & Greuter
(86) Numéro de dépôt international: PCT/FR2005/001405
(87) Numéro de publication internationale: WO 2006/008357

(56) Documents cités:
- EP-A- 0 628 602
- EP-A1- 1 120 244
- EP-A1- 1 227 131
- EP-A1- 1 227 132
- EP-A2- 0 779 084
- EP-A2- 1 559 543
- WO-A1-2006/008357
- FR-A- 406 756
- FR-A1- 2 575 756
- FR-A1- 2 606 416
- US-A- 3 646 156
- US-A- 5 614 683
- US-A1- 2001 051 256
- US-A1- 2002 173 596
- US-A1- 2002 179 888
- PATENT ABSTRACTS OF JAPAN vol. 010, no. 078 (C-335), 27 mars 1986 (1986-03-27) & JP 60 215054 A (DAISERU HIYURUSU KK), 28 octobre 1985 (1985-10-28)
- PATENT ABSTRACTS OF JAPAN vol. 005, no. 002 (M-049), 9 janvier 1981 (1981-01-09) & JP 55 135638 A (DAICEL CHEM IND LTD), 22 octobre 1980 (1980-10-22)
- Produkdaten -Rilsan
- Produktdatenblatt RILSAN AESN 0 14 TL
- Produktdatenblatt Orevac 18729
- Produktdatenblatt Orevac 18760
- Dr Martin Wieilputz und Michael Beyer. Innovative surface finishing techniques with »high performance technical films. High Performance Plastics 2005. Vienna. Austria. 5-6 April 2005
- Michael Seyer, Jörg Lohmar: -Schön und robust?; KU Kunststoffe,Jahrg. 90 (2000)
- ISO 11357-3
- Techniques de l'Ingenieur, fascicule AM 3 038, pages 1 a 8. 2009
- Holmes D. R., "The crystal structure of polycaproamide : Nylon 6", Journal of Polymer Sciences, 1955, 17, p. 159-177
- fiche Mettler-Toledo, juin 1998
- déclaration par M Thibaut

## Description

### [Domaine de l'invention]

La présente invention concerne une structure multicouche à base de polyamide pour recouvrir des substrats. Cette structure multicouche esthétique et résistante, préalablement ou non mise en forme par thermoformage, destinée à être associée / solidarisée à un substrat (typiquement rigide) au cours d'une opération de surmoulage ou de lamination ou autre. Elle comprend une couche (ou face) supérieure et une couche (ou face) inférieure, c'est la couche inférieure qui est disposée contre le substrat. La structure est aussi appelée film ou feuille quand son épaisseur est au plus de l'ordre de 0,5 à 1 mm. La structure est disposée dans un moule d'injection, la couche supérieure étant disposée du coté de la paroi du moule puis on injecte la substrat à l'état fondu du .coté de la couche inférieure. La structure peut être thermoformée avant d'être disposée dans le moule. Après refroidissement et ouverture du moule on récupère le substrat recouvert de la structure.

### [Le problème technique]

Cette structure multicouche doit posséder tous les avantages suivants :
Avoir une face supérieure présentant un bel aspect de surface, par exemple très brillant ou au contraire mat, c'est à dire avoir une face supérieure apte à bien prendre le grain ou à bien rendre les états de surface, c'est à dire apte à devenir lisse et brillante (au contact d'une paroi métallique polie de moule suffisamment chaude) ou à devenir mat et grainée (au contact d'une paroi métallique mat ou grainée de moule suffisamment chaude), ou à prendre un aspect brossé. Typiquement et préférentiellement, l'aspect de surface est donné lors de la fabrication de l'objet, préférentiellement lors de la dernière étape en température (T° > Tg), par exemple lors du surmoulage de la feuille.

Avoir une face supérieure présentant un beau rendu de couleur (donc bien transparent pour que la couleur sous-jacente présente un effet de profondeur et un rendu vernis).

Avoir une face supérieure résistante à l'agression mécanique : choc, abrasion (sable, brosse de lavage), coup, coupure ; (éventuellement même réparable / rebrillantable par le biais d'un flammage de surface). Cette résistance s'entend du point de vu d'une faible perte de matière comme du point de vue esthétique, c'est à dire que l'agression mécanique est peu visible, par exemple pas d'effilochage.

Avoir une face supérieure résistante à l'agression chimique et au stress cracking. La résistance à l'agression chimique veut dire par exemple une résistance aux produits et solvants de nettoyage, aux huiles telles que par exemple les huiles des moteurs d'automobiles, au liquide de lave glace des automobiles, et aux liquides de batterie.

Avoir une face supérieure résistante (faible jaunissement, préservation de la tenue mécanique) à l'agression du rayonnement solaire UV.

Avoir une face supérieure pouvant être ultérieurement réparée, plus précisément re-brillantée par une simple opération de chauffe superficielle, par exemple à l'aide d'un flammage, cet avantage est préféré mais pas obligatoire.

Avoir un comportement thermomécanique propice au thermoformage, notamment en étant facilement déformable à chaud tout en étant en dessous de son point de fusion.

Avoir une face supérieure qui ne se déforme pas rédhibitoirement sous l'effet d'un environnement chaud.

Avoir une face supérieure qui ne se déforme pas rédhibitoirement sous l'effet de l'humidité, et dont les propriétés physiques et chimiques varient modérément en fonction de l'humidité.

Avoir un face inférieure apte à adhérer à un substrat, ce dernier étant typiquement introduit par une étape de surmoulage, ce substrat étant typiquement du PP, du PA6 du PA6.6 ou un polymère styrènique tel que l'ABS, lesquels sont typiquement renforcés par des fibres de verre ou des charges minérales. Ce substrat est nécessaire pour obtenir une pièce finie suffisamment rigide (aile de carrosserie, cache moteur, partie de tableau de bord). D'autres techniques d'association peuvent également être envisagés ; par exemple des techniques d'association de la feuille avec ces substrats, on peut citer la lamination.

Avoir une feuille dont l'ensemble des couches adhèrent bien et durablement entre-elles.

Avantageusement mais pas obligatoirement la face supérieure peut être décorée par sublimation (voire par autre procédé).

Avantageusement mais pas obligatoirement la face inférieure peut être décorée par sublimation ou par sérigraphie (voire par autre procédé).

### [L'art antérieur]

L'art antérieur a décrit des pièces d'aspect dont la face externe (appelée aussi face supérieure) est constituée d'un polymère amorphe tel le polycarbonate (PC), le PMMA, le MABS (copolymère du MMA, de l'acrylonitrile, du butadiène et du styrène). Ces pièces ont une mauvaise résistance chimique, une mauvaise tenue au stress-cracking et une mauvaise tenue UV.

L'art antérieur a décrit des pièces d'aspect dont la face externe est constituée d'une peinture et/ou d'un vernis. La tenue au choc est meilleure que dans l'art antérieur précédent mais il y a un problème de solvant lié au vernis.

L'art antérieur a décrit des pièces d'aspect dont la face externe est constituée d'un polymère semi-cristallin de type PA6, PA6-6 et leurs alliages. L'aspect de surface est inesthétique, il y a de trop grandes variations dimensionnelles due à la forte reprise en eau des polyamides en C6. De plus la résistance au ZnCl2 de ces PA est limitée.

L'art antérieur a décrit des pièces d'aspect dont la face externe est constituée d'un polymère semi-cristallin de type PVDF et ses alliages avec le PMMA. Cependant ces produits sont inaptes à bien prendre le grain et à bien rendre les états de surface, de plus la résistance à la rayure est moins bonne que celle d'un polyamide.

L'art antérieur a décrit des pièces d'aspect dont la face externe est constituée d'un polymère semi-cristallin de type polypropylène, polyacétal (POM), PBT et leurs alliages. L'aspect de surface est inesthétique, la tenue chimique est moyenne.

### [Brève description de l'invention]

La présente invention concerne une structure multicouche selon la revendication 1, à base de polyamide et comprenant successivement :
une couche supérieure en polyamides transparents une couche inférieure capable d'adhérer sur le substrat,
éventuellement une couche intermédiaire (appelée aussi couche centrale) de liant disposée entre la couche supérieure et la couche inférieure,
chacune des couches présentant un comportement thermomécanique (rigidité en fonction de la température) suffisamment proche pour permettre à la structure d'être aisément mise en forme sous l'effet de la température.

La couche supérieure est en polyamide(s) hautement carboné(s) pour limiter la reprise en eau, les variations dimensionnelles et améliorer la tenue chimique il est transparent (aspect). On entend par très transparent une transparence >= 80% de transmission lumineuse sur un objet d'épaisseur 2mm à une longueur d'onde de 560nm (cf ISO ISO 13468). On entend par transparent une transparence >= 50% de transmission lumineuse sur un objet d'épaisseur 2mm à une longueur d'onde de 560nm (cf ISO 13468).

La couche inférieure est soit de même nature que le substrat (donc adhèrera à chaud ou en fondu sur ce substrat) soit susceptible d'adhérer chimiquement ou physiquement avec ce substrat. Le substrat pouvant être par exemple soit du PP, soit du PA6 ou PA66, soit un polymère styrènique tel que de l'ABS.

**La couche intermédiaire éventuelle de liant** facilite l'adhésion des couches supérieure et inférieure. Cette couche intermédiaire n'étant pas indispensable si la couche inférieure et/ou supérieure sont formulées de telle sorte qu'il y ait adhésion directe entre elles.

**Chacune des couches présente un comportement thermomécanique** (rigidité en fonction de la température) suffisamment proche pour permettre à la structure d'être aisément mise en forme sous l'effet de la température (thermoformage ou formage durant le surmoulage), et pour ne pas se déformer de façon rédhibitoire lors de la vie ultérieure de la pièce. Ce comportement est défini par DMA ("dynamic mechanical analyse" ou "analyse mécanqiue dynamique" ou leur module de flexion mesuré aux températures considérées (ISO178). Les températures de fusion ou de transition vitreuse des différentes couches ont un écart de l'ordre de 25 à 50°C au plus. Si une des couches ne répond pas suffisamment à ces critères favorables, alors on en mettra une épaisseur suffisamment faible pour que son comportement ait une influence suffisamment faible sur le comportement de la l'ensemble de la structure multicouche. A signaler qu'en cas de différence de comportement thermomécanique un peu trop prononcée, on pourra jouer en augmentant l'épaisseur relative d'une des couches pour que le comportement thermomécanique de celle-ci prime dans la structure.

Les structures sont réalisées préférentiellement par extrusion calandrage (épaisseur de 50 à 3000 µm), ou par extrusion cast (appelé encore film casting ; épaisseur de 10 à 500 µm) ou par extrusion soufflage de gaine (épaisseur 10µm à 300 µm). Ces structures sont ensuite typiquement thermoformées (si suffisamment épaisses et si les étapes avals le requièrent). Les structures sont ensuite typiquement placées dans un moule d'une presse à injection (ces structures ayant été ou pas préalablement thermoformées, ce thermoformage est préférable dans le cas de structures assez épaisses) et le substrat est alors surmoulé sur la structure. Le surmoulage est le procédé typique, mais d'autres procédé d'assemblage du film et du substrat peuvent être considérés.

L'invention concerne aussi les objets constitués de ces substrats recouverts de ces structures, la couche inférieure étant disposée contre le substrat.

### [Description détaillée de l'invention]

Les polyamides sont microcristallins sont constitués d'un édifice cristallin (sphérolite) d'une taille suffisamment petite pour ne pas diffracter la lumière et permettre ainsi une bonne transparence. On les désigne dans la suite du texte par l'appellation abrégée "micro-cristallins". Parmi ces polyamides micro-cristallins on préfère ceux dont la Tg (température de transition vitreuse) est comprise entre 40°C et 90°C, et la Tf (température de fusion) est comprise entre 150°C et 200° c, et le taux de cristallinité est supérieur à 10% (1ère chauffe de ose selon ISO 11357 à 40°C/min), et l'enthalpie de fusion> 25J/g (1^{ère} chauffe de OSC selon ISO 11357 à 40°C/min).

Ces polyamides micro-cristallins sont malléables, flexibles, travaillables et se mettent en forme, à chaud, entre Tg et Tf par exemple entre 60 et 190°C. Cette plage de température est celle à laquelle on effectue le thermoformage et le surmoulage. Les polyamides cristallins sont trop rigides à ces température et beaucoup de polyamides amorphes sont fondus à ces températures. Ces polyamides micro-cristallins sont bien rigides, durs (résistance à l'abrasion) et durables à T° < Tg qui sont les températures d'usage / de service. Elles sont de l'ordre de - 40°C +60°C.

On préfère tout particulièrement ce type de produit car il présente en plus de l'avantage de la transparence totale, l'avantage d'offrir un très bel état de surface et qui reproduit nettement plus fidèlement l'état de surface du moule. Si le moule est poli l'état de surface final sera très poli, lisse et brillant. Si le moule est mat, l'état de surface final sera mat. Si le moule est grainé, l'état de surface final sera grainé. Si le moule est brossé, l'état de surface final sera brossé. On a donc l'avantage de pouvoir particulièrement bien rendre des états de surface de métaux, de bois etc...

**A titre d'exemple de polyamides micro-cristallins on peut citer la** composition transparente comprenant en poids, le total étant 100%:
- 5 à 40% d'un polyamide amorphe (B) qui résulte essentiellement de la condensation:
   ➢ soit d'au moins une diamine choisie parmi les diamines cycloaliphatiques et les diamines aliphatiques et d'au, moins un diacide choisi, parmi les diacides cyctoaliphatiques et les diacides aliphatiques, l'un au moins de ces motifs diamines ou diacides étant cycloaliphatique,
   ➢ soit d'un acide alpha omega amino carboxylique cycloaliphatique,
   ➢ soit d'une combinaison de ces deux possibilités,
   ➢ et éventuellement d'au moins un monomère choisi parmi les acides alpha omega amino carboxyliques ou les éventuels lactames correspondants, les diacides aliphatiques et les diamines aliphatiques,
- 0 à 40% d'un polyamide souple (C) choisi parmi les copolymères à blocs polyamides et blocs polyether et les copolyamides,
- 0 à 20% d'un compatibilisant (D) de (A) et (B),
- 0 à 40% d'un modifiant souple (M),
- avec la condition que (C)+(D)+(M) est compris entre 0 et 50%,
- le complément à 100% d'un polyamide (A) semi cristallin.

On la désigne dans la suite du texte, par simplification, par polyamide micro-cristallin de type 1". Elle se fabrique facilement car la température à partir de laquelle il y a formation d'un matériau transparent est suffisamment basse pour être très proche et même identique, voir même inférieure, à la température usuelle de compoundage (malaxage à l'état fondu dans une extrudeuse ou un mélangeur) de (A). Typiquement cette température se situe aux environs de 270°C. Cette température est d'autant plus basse que la quantité de (D) est plus élevée. L'avantage de cette température est qu'on peut produire ce matériau dans les conditions usuelles de compoundage, qu'il n'y a pas de dégradation, la composition ne jaunit pas, il n'y a pas ou peu de points noirs ni de gels et la composition est plus facilement recyclable (elle pourra subir plus facilement une nouvelle mise en oeuvre). Cette composition est micro-cristalline.

**On décrit maintenant plus en détail ces polyamides micro-cristallins de type 1.**

**S'agissant du polyamide (A) semi cristallin** on peut citer (i) les polyamide aliphatiques qui sont les produits de condensation d'un acide alpha omega amino carboxylique aliphatique, d'un lactame ou les produits de condensation d'une diamine aliphatique et d'un diacide aliphatique et (ii) les autres polyamides pourvu qu'ils soient semi cristallins. Parmi ces autres polyamides semi cristallins on préfère ceux qui ont des structures cristallines suffisamment petites pour être proches de la transparence.

A titre d'exemple d'acide alpha omega amino carboxylique aliphatique on peut citer les acides aminocaproïques, amino-7-heptanoïque, amino-11-undécanoïque et amino-12-dodécanoïque. A titre d'exemple de lactame on peut citer le caprolactame, l'oenantholactame et le lauryllactame. A titre d'exemple de diamines aliphatiques on peut citer l'hexaméthylènediamine, la dodécaméthylènediamine et la triméthylhexaméthytène diamine. A titre d'exemple de diacides aliphatiques on peut citer les acides adipique, azélaïque, subérique, sébacique et dodécanedicarboxylique.

Parmi les polyamides aliphatiques, on peut citer, à titre d'exemple et de façon non limitative, les polyamides suivants: polyundécanamide (PA11); polylauryllactame (PA-12); polyhexaméthylène azélamide (PA-6,9); polyhexaméthylène sébaçamide (PA-6,10); polyhexaméthylène dodécanamide (PA-6,12); polydécaméthylène dodécanamide (PA-10,12); polydécaméthylène sébaçanamide (PA-10,10) et le polydodecaméthylène dodécanamide (PA-12,12).

Avantageusement (A) provient de la condensation d'un lactame ayant au moins 9 atomes de carbone, d'un acide alpha omega amino carboxylique ayant au moins 9 atomes de carbone ou d'une diamine et d'un diacide tels que la diamine ou le diacide a au moins 9 atomes de carbone. Avantageusement (A) est le PA 11 et le PA 12 et de préférence le PA 12. On ne sortirait pas du cadre de l'invention si (A) était un mélange de polyamides aliphatiques.

**S'agissant du polyamide amorphe à motif cycloaliphatique (B)** les diamines cycloaliphatiques peuvent être les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP), et para-amino-di-cyclo-hexyl-méthane (PACM). Les autres diamines couramment utilisées peuvent être l'isophoronediamine (IPDA) et la 2,6-bis-(aminométhyl)-norbornane (BAMN). Les diacides aliphatiques ont été cités plus haut. A titre d'exemple on peut citer le PA-IPDA,12 résultant de la condensation de l'isophorone diamine avec l'acide dodecanedicarboxylique. Le polyamide amorphe (B) peut contenir éventuellement au moins un monomère ou comonomère choisi parmi:
les acides alpha omega amino carboxyliques,
les diacides aliphatiques,
les diamines aliphatiques,
ces produits ont été décrits plus haut. A titre d'exemple de (B) on peut citer le PA-IPDA,10, le coPA-IPDA,10/12, le PA-IPDA,12. On ne sortirait pas du-cadre de l'invention si (B) était un mélange de plusieurs polyamides amorphes.

**S'agissant du polyamide souple (C) et d'abord les copolymères à blocs polyamides et blocs polyethers** Ils résultent de la copolycondensation de séquences polyamides à extrémités réactives avec des séquences polyéthers à extrémités réactives, telles que, entre autres :
1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
3) Séquences polyamides à bouts de chaînes dicarboxyliques avec des polyétherdiols, les produits obtenus étant, dans ce cas particulier, des polyétheresteramides. Les copolymères (C) sont avantageusement de ce type.

Les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne.

La masse molaire en nombre *M̅n̅* des séquences polyamides est comprise entre 300 et 15 000 et de préférence entre 600 et 5 000. La masse *M̅n̅* des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentant, par exemple, des duretés shore D pouvant être comprises entre 20 et 75 et avantageusement entre 30 et 70 et une viscosité intrinsèque entre 0,8 et 2,5 mesurée dans le métacrésol à 25°C pour une concentration initiale de 0,8 g/100 ml. Les MFI peuvent être compris entre 5 et 50 (235°C sous une charge de 1 kg)

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

**S'agissant du polyamide souple (C) constitué de copolyamide il résulte** soit de la condensation d'au moins un acide alpha oméga aminocarboxylique (ou un lactame), au moins une diamine et au moins un diacide carboxylique soit de la condensation d'au moins deux acides alpha oméga aminocarboxyliques (ou leurs lactames correspondants eventuels ou d'un lactame et de l'autre sous forme acide alpha oméga aminocarboxylique). Ces constituants ont déjà été définis plus haut.

A titre d'exemples de copolyamides on peut citer des copolymères de caprolactame et de lauryl lactame (PA 6/12), des copolymères de caprolactame, d'acide adipique et d'hexaméthylène diamine (PA 6/6-6), des copolymères de caprolactame, de lauryle lactame, d'acide adipique et d'hexaméthylène diamine (PA 6/12/6-6), des copolymères de caprolactame, de lauryle lactame, d'acide amino 11 undécanoïque, d'acide azélaïque et d'hexaméthylène diamine (PA 6/6-9/11/12), des copolymères de caprolactame, de lauryle lactame, d'acide amino 11 undécanoïque, d'acide adipique et d'hexaméthylène diamine (PA -6/6-6/11/12), des copolymères de lauryle lactame, d'acide azélaïque et d'hexaméthylène diamine (PA 6-9/12). Les copolyamides préférés sont des -copolyamides avec un caractère copolymère marqué, c'est à dire avec des proportions essentiellement équivalentes des différents comonomères, ce qui conduit aux propriétés les plus éloignés des homopolymères polyamides correspondants. On ne sortirait pas du cadre de l'invention si (C) était un mélange de plusieurs copolymères à blocs polyamides et blocs polyethers ou de plusieurs copolyamides ou toutes combinaison de ces possibilités.

**S'agissant du compatibilisant (D) de (A) et (B)** c'est tout produit qui fait baisser la température nécessaire pour rendre le mélange de (A) et (B) transparent. Avantageusement c'est un polyamide. Par exemple si (A) est le PA 12 alors (D) est le PA 11. De préférence c'est un polyamide aliphatique catalysé.

S'agissant du polyamide (D) catalysé c'est un polyamide comme décrit plus haut pour (A) mais contenant un catalyseur de polycondensation tel que un acide minéral ou organique, par exemple de l'acide phosphorique. Le catalyseur peut être ajouté dans le polyamide (D) après sa préparation par un procédé quelconque ou, tout simplement et c'est ce que l'on préfère, être le reste du catalyseur utilisé pour sa préparation. "Polyamide catalysé" veut dire que la chimie va se poursuivre au delà des étapes de synthèse de la résine de base et donc au cours des étapes ultérieures de la préparation des compositions de l'invention. Des réactions de polymérisation et/ou dépolymerisation pourront avoir très substantiellement lieu au cours du mélange des polyamides (A) et (B) et (D) pour préparer les compositions de la présente invention. Typiquement, la demanderesse pense (sans être liée par cette explication) que l'on continue à polymériser (allongement de chaîne) et à brancher les chaînes (par exemple pontage par le biais de l'acide phosphorique). De plus ceci peut être considéré comme une tendance au rééquilibrage de l'équilibre de polymérisation, donc une sorte d'homogénéisation. Il est cependant recommandé de bien sécher (et avantageusement de bien maîtriser les niveaux d'humidité) les polyamides pour éviter des dépolymerisations. La quantité de catalyseur peut être comprise entre 5 ppm et 15000 ppm d'acide phosphorique par rapport la résine (D). Pour d'autres catalyseurs, par exemple l'acide borique, les teneurs seront différentes et peuvent être choisies de façon appropriée Selon les techniques habituelles de la polycondensation des polyamides.

**S'agissant du modifiant souple (M)** à titre d'exemple on peut citer les polyoléfines fonctionnalisées, les polyesters aliphatiques greffés, les copolymères à blocs polyéther et blocs polyamide éventuellement greffés, les copolymères de l'éthylène et d'un (méth)acrylate d'alkyle et/ou d'un ester vinylique d'acide carboxylique saturé. Les copolymères à blocs polyéther et blocs polyamide peuvent être choisis parmi ceux qu'on a cités plus haut pour (C), on choisit plutôt des copolymères souples c'est à dire ayant un module de flexion inférieur à 200 MPa.

Le modifiant peut être aussi une chaîne de polyoléfine ayant des greffons polyamide ou oligomères de polyamide ; ainsi il a des affinités avec les polyoléfines et les polyamides.

Le modifiant souple peut être aussi un copolymère à blocs ayant au moins un bloc compatible avec (A) et au moins un bloccompatible avec (B).

A titre d'exemple de modifiant souple on peut encore citer :
- les copolymères de l'éthylène, d'un époxyde insaturé et éventuellement d'un ester ou un sel d'acide carboxylique insaturé ou d'un ester vinylique d'acide carboxylique saturé. Ce sont par exemple les copolymères éthylène / acétate de vinyle / (méth)acrylate de glycidyle ou les copolymères éthylène / (méth)acrylate d'alkyle / (méth)acrylate de glycidyle.
- les copolymères de l'éthylène d'un anhydride d'acide carboxylique insaturé et/ou d'un acide carboxylique insaturé pouvant être partiellement neutralisé par un métal (Zn) ou un alcalin (Li) et éventuellement d'un ester d'acide carboxylique insaturé ou d'un ester vinylique d'acide carboxylique saturé. Ce sont par exemple les copolymères éthylène / acétate de vinyle / anhydride maléique ou les copolymères éthylène / (méth)acrylate d'alkyle / anhydride maléique ou encore les copolymères éthylène / (méth)acrylate de Zn ou Li / anhydride maléique.
- le polyéthylène, le polypropylène, les copolymères éthylène propylène greffés ou copolymérisés avec un anhydride d'acide carboxylique insaturé puis condensés avec un polyamide (ou un oligomère de polyamide) monoaminé. Ces produits sont décrits dans EP 342 066.

Avantageusement, la polyoléfine fonctionnalisée est choisie parmi les copolymères éthylène / (méth.)acrylate d'alkyle / anhydride maléique, les copolymères éthylène / acétate de vinyle / anhydride maléique, les copolymères éthylène propylène majoritaires en propylène greffés par de l'anhydride maléique puis condensés avec du polyamide 6 monoaminé ou des oligomères mono aminés du caprolactame.

De préférence, c'est un copolymère éthylène / (méth.)acrylate d'alkyle / anhydride maléique comprenant jusqu'à 40% en poids de (méth.)acrylate d'alkyle et jusqu'à 10% en poids d'anhydride maléique. Le (méth.)acrylate d'alkyle peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle

A titre de polyesters aliphatiques greffés on peut citer la polycaprolactone greffée par de l'anhydride maléique, du méthacrylate de glycidyle, des esters vinyliques ou du styrène. Ces produits sont décrits dans la demande EP 711 791.

Il est recommandé de choisir un modifiant souple qui ne réduit pas la transparence de la composition. L'intérêt des compositions (A) + (B), (A) + (B) + (C), (A) + (B) + (C) + (D) précédemment mentionnées est qu'elles ont un indice de réfraction résultant proche de la majorité des modifiants (M) mentionnés. Il est donc possible de rajouter un modifiant (M) de même (ou très proche) indice de réfaction. Ce n'était pas le cas avec les compositions polyamides transparentes citées dans l'art antérieur car leurs indices de réfraction sont typiquement plus élevés que l'indice de réfraction des modifiant (M) les plus usuels.

D'une manière générale le modifiant (M) est utile pour assouplir encore plus ou conférer une propriétés particulière (d'ou son nom de modifiant) sans pour autant que l'on perde les propriétés avantageuses de transparence, de fabrication à basse T° et d'aptitude à la sublimation. Parmi ces propriétés supplémentaires que peut apporter le modifiant, citons : modifiant choc pour améliorer la tenue au choc, modifiant porteur de fonctions réactives pour améliorer l'adhésion du matériau sur les substrats, modifiant pour donner un aspect mat, modifiant pour donner un toucher soyeux ou glissant, modifiant pour rendre plus visqueux le matériau afin de le mettre en oeuvre par soufflage.

Il est avantageux de mélanger les modifiants afin de combiner leurs effets.

Des compositions avantageuses sont celles dont les proportions des constituants sont les suivantes (le total étant 100%) et sont décrites dans le tableau 1 suivant :

**Tableau 1**

| **A** | **B** | **C+D+M** | **C** | **D** | **M** |
|---|---|---|---|---|---|
| complément à 100% | 5 à 40 | 0 à 50 | 0 à 40 | 0 à 20 | 0 à 40 |
| complément à 100% | 20 à 30 | 0 à 50 | 0 à 40 | 0 à 20 | 0 à 40 |
| complément à 100% | 5 à 40 | 0 à 30 | 0 à 30 | 0 à 20 | 0 à 30 |
| complément à 100% | 10 à 30 | 0 à 30 | 0 à 30 | 0 à 20 | 0 à 30 |
| complément à 100% | 20 à 30 | 0 à 30 | 0 à 30 | 0 à 20 | 0 à 30 |
| complément à 100% | 10 à 30 | 0 à 20 | 0 à 20 | 0 à 20 | 0 à 20 |
| complément à 100% | 10 à 30 | 5 à 15 | 0 à 15 | 0 à 15 | 0 à 15 |
| complément à 100% | 20 à 30 | 0 à 20 | 0 à 20 | 0 à 20 | 0 à 20 |
| complément à. 100% | 20 à 30 | 5 à 15 | 0 à 15 | 0 à 15 | 0 à 15 |

Ces compositions sont fabriquées par mélange à l'état fondu des différents constituants (extrudeuses bivis, BUSS^{®}, monovis) selon les techniques habituelles des thermoplastiques. Les compositions peuvent être granulées en vue d'une utilisation ultérieure (il suffit de les refondre) ou bien de suite injectées dans un moule ou un dispositif d'extrusion ou de coextrusion pour fabriquer des plaques, des films. L'homme de métier peut ajuster facilement la température de compoundage pour obtenir un matériau transparent, en règle générale il suffit d'augmenter la température de compoundage par exemple vers 280 ou 290°C.

Ces compositions peuvent comprendre des stabilisants, des antioxydants, des anti UV.

**A titre d'autre exemple de polyamides micro-cristallins on peut citer** la composition transparente comprenant en poids, le total étant 100%:
- 5 à 40% d'un polyamide amorphe (B) qui résulte essentiellement de la condensation d'au moins une diamine éventuellement cycloaliphatique, d'au moins un diacide aromatique et éventuellement d'au moins un monomère choisi parmi :
   les acides alpha omega amino carboxyliques,
   les diacides aliphatiques,
   les diamines aliphatiques,
- 0 à 40% d'un polyamide souple (C) choisi parmi les copolymères à blocs polyamides et blocs polyether et les copolyamides,
- 0 à 20% d'un compatibilisant (D) de (A) et (B),
- (C)+(D) est compris entre 2 et 50%
- avec la condition que (B)+(C)+(D) n'est pas inférieur à 30%,
le complément à 100% d'un polyamide (A) semi cristallin.

On la désigne dans la suite du texte, par simplification, par "polyamide micro-cristallin de type 2". Elle diffère de la précédente essentiellement par la nature de (B) et dans une moindre mesure par les proportions des constituants. Elle est préparée de la même façon, elle est micro-cristalline.

Avantageusement la proportion de (B) est comprise entre 10 et 40% et de préférence entre 20 et 40%. Avantageusement la proportion de (C)+(D) est comprise entre 5 et 40% et de préférence 10 et 40%.

**S'agissant du polyamide amorphe (B) dans la composition de polyamide micro-cristallin de type 2** il résulte essentiellement de la condensation d'au moins une diamine éventuellement cyctoaliphatique et d'au moins un diacide aromatique. Des exemples de diamines aliphatiques ont été citées plus haut, les diamines cycloaliphatiques peuvent être les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP). Les autres diamines couramment utilisées peuvent être l'isophoronediamine (IPDA) et la 2,6-bis-(aminométhyl)-norbomane (BAMN). A titre d'exemple de diacides aromatiques on peut citer les acides téréphtalique (T) et isophtalique (I).

Le polyamide amorphe (B) peut contenir éventuellement au moins un monomère choisi parmi:
les acides alpha omega amino carboxyliques,
les diacides aliphatiques,
les diamines aliphatiques,
ces produits ont été décrits plus haut.

A titre d'exemple de (B) on peut citer le polyamide semi-aromatique amorphe PA-12/BMACM, TA/BMACM,IA synthétisé par polycondensation à l'état fondu à partir de bis-(3-méthyl-4-aminocyclohexyl)-méthane (BMACM), de lauryllactame (L12) et d'acides iso- et téréphtalique (IA et TA). On ne sortirait pas du cadre de l'invention si (B) était un mélange de plusieurs polyamides amorphes.

**S'agissant des polyamides de la couche supérieure aussi bien de la premier forme que de la deuxième** **forme** on préfère les polyamides où le rapport de bouts de chaine [NH2]/[COOH] est > 1. Avantageusement ces polyamides sont très transparents c'est à dire une transparence >= 80% de transmission lumineuse sur un objet d'épaisseur 2mm à une longueur d'onde de 560nm (cf ISO ISO 13468).

**S'agissant du substrat** il est avantageusement soit en PP (polypropylène), soit en PA 6 ou PA 6.6 soit en polymère styrénique tel que par exemple l'ABS. Selon sa nature la couche inférieure et la couche intermédiaire éventuelle sont différentes.

**On considère maintenant le substrat en polypropylène**. Le terme polypropylène, pour le substrat, désigne le polypropylène homopolymère ou copolymère, les mélanges et alliages de PP, le PP chargé fibres de verre et/ou minéraux.

S'agissant de la couche inférieure elle est soit en polypropylène homopolymère ou copolymère ou alliage ou mélange à base de PP. Quant à la couche centrale elle est constituée de polymère(s) jouant le rôle de liant des 2 autres couches, basée sur des polyoléfines ou co-polyoléfines toutes ou en partie greffées ou co-polymérisées anhydride, époxyde ou acide, préférentiellement anhydride maléique. Avantageusement la couche centrale est en polyoléfine tout ou en partie greffée ou co-polymérisée anhydride, époxyde ou acide, préférentiellement anhydride maléique. De préférence la polyoléfine est le PP homopolymère ou copolymère.

Selon une autre forme la couche centrale est en mélange PP majoritaire + PE tout ou en partie greffé anhydride, époxyde ou acide, préférentiellement anhydride maléique.

Selon une autre forme la couche centrale est constituée d'une copolyoléfine non essentiellement constitué de PP, mais adhérent suffisamment sur le PP, prise dans la famille des copolymères de l'éthylène d'un (meth)acrylate d'alkyle et soit d'acide acrylique soit d'anhydride maleique soit d'un époxy.

Selon une variante il n'y a pas de couche centrale et la douche inférieure est en polypropylène tout ou en partie greffé anhydride, époxyde ou acide, préférentiellement anhydride maléique.

Avantageusement la température de fusion de la couche inférieure, celle de la couche supérieure et celle de l'éventuelle couche centrale sont dans une plage de 50°C au plus et de préférence de 25°C au plus.

**On considère maintenant le substrat en polyamide**. Il s'agit de polyphtalamides ou de polyamides aliphatiques tels que le PA-6 ou des produits de condensation d'une diamine et d'un diacide n'ayant chacun pas plus de 8 atomes de carbone tels que par exemple le PA-6.6, PA-4.6, coPA-6/autre monomère et coPA-6.6/ autre monomère. A titre d'exemple de polyphtalamides on peut citer les PA6/6.T, PA-6.6/6.T, PA-6:6/6.I/6.T, PA-6.I/6.T, PA-9.T, PA-MXD.6, PA-6.I, leurs mélanges et alliages, leurs versions chargées fibres de verre et minéraux etc... La couche inférieure est en polyamide de la même famille que le polyamide du substrat ou dans une famille susceptible de donner une bonne adhésion avec le polyamide du substrat. Ce polyamide est par exemple choisi parmi les PA-6, PA-6.6, PA-4.6, les polyphtalamides ou les alliages de ces polyamides. La couche centrale est constituée de polymère(s) jouant le rôle de liant des 2 autres couches.

S'agissant plus précisément de la couche inférieure, elle est constituée avantageusement de polyamides où le ratio de bout de chaine [NH2]/[COOH] est > 1.

Avantageusement elle est constituée d'un polyamide identique ou proche de celui du substrat sur lequel le film sera amené à adhérer in fine. Par proche on entend soit un mélange comprenant en majorité ce polyamide par rapport à d'autres polymères soit un copolymère majoritairement constitué du même monomère que celui du polyamide substrat, tout ces produits pouvant bien évidemment être additivés selon l'usage courant.

Si le substrat est en PA-6 ou à majorité en PA-6 la couche inférieure est soit constituée de PA6 ou coPA-6/autre monomère, l'autre monomère étant très minoritaire (<30%) pour garantir l'adhésion sur substrat PA6. L'autre monomère peut être soit un lactame (par exemple le lauryllactame) ou un acide alpha-omega aminocarboxylique différent du caprolactame soit un mélange d'une diamine et d'un diacide. Ainsi le coPA-6/autre monomère peut être un coPA 6/ 12 (copolymère du caprolactame, et du lauryllactame) riche en 6 ou un coPA 6/ 6.6 copolymère du caprolactame, de l'hexaméthylene diamine et de l'acide adipique riche en caprolactame.

Si le substrat est en PA-6.6 ou à majorité en PA-6.6 la couche inférieure est soit constituée de PA-6.6 ou coPA-6.6/autre monomère, l'autre monomère étant très minoritaire (<30%) pour garantir l'adhésion sur substrat PA-6.6. L'autre monomère peut être soit un lactame (par exemple le lauryllactame) ou un acide alpha-omega aminocarboxylique soit un mélange d'une diamine et d'un diacide. Ainsi le coPA-6.6/autre monomère peut être un coPA-6.6/ 12 (copolymère de l'hexaméthylene diamine, de l'acide adipique et du lauryllactame) riche en 6.6. Il peut être aussi un coPA-6.6/ 6 (copolymère de l'hexaméthylene diamine, de l'acide adipique et du caprolactame) riche en 6.6.

Si le substrat est en PA-4.6 ou à majorité en PA-4.6 la couche inférieure est soit constituée de PA-4.6 ou coPA-4.6/autre monomère, l'autre monomère étant très minoritaire (<30%) pour garantir l'adhésion sur substrat PA-4.6. L'autre monomère peut être soit un lactame (par exemple le lauryllactame) ou un acide alpha-omega aminocarboxylique soit un mélange d'une diamine et d'un diacide. Ainsi le coPA-4.6/autre monomère peut être un coPA-4.6/ 12 (copolymère de l'hexaméthylene diamine, de l'acide adipique et du lauryllactame) riche en 6.6. Il peut être aussi un coPA-4.61 6 (copolymère de l'hexaméthylene diamine, de l'acide adipique et du caprolactame) riche en 6.6.

Si le substrat est en polyphtalamide ou à majorité en polyphtalamide la couche inférieure est constituée de coPA-6.I/autre monomère ou de coPA-6.T/autre monomère, l'autre monomère étant très minoritaire (<30%) pour garantir l'adhésion sur le substrat en polyphtalamide. L'autre monomère peut être soit un lactame (par exemple le lauryllactame) ou un acide alpha-omega aminocarboxylique soit un mélange d'une diamine et d'un diacide. Ainsi le coPA-6.I/autre monomère peut être un coPA-6.I/ 12 (copolymère de l'hexaméthylene diamine, de l'acide isophtalique est du lauryllactame) riche en 6.I. Il peut être aussi un coPA-6.I/ 6 (copolymère de l'hexaméthylene diamine, de l'acide isophtalique et du caprolactame) riche en 6.I.

Selon une autre forme la couche inférieure est constituée majoritairement du même polyamide que le substrat et d'un polyamide catalysé, éventuellement d'un plastifiant et éventuellement d'un modifiant-choc.

Si le substrat est en alliage de PA-6.6 et de PPO (polyphènylène oxyde) la couche inférieure est constituée de PA-6.6 ou d'un mélange constitué en majorité de PA-6.6.

Si le substrat est en PA-6 ou à majorité en PA-6 la couche inférieure est constituée soit d'un mélange de PA-6 et d'ABS majoritaire en PA-6 soit d'un mélange de PA-6 et de polycarbonate majoritaire en PA-6.

Selon une autre forme la couche inférieure est un mélange :
d'un polyamide provenant de la condensation soit d'un lactame ou d'un alpha-omega-aminoacide ayant au moins 9 atomes de carbone soit d'une diamine et
d'un diacide, l'un au moins ayant au moins 9 atomes de carbone et
d'autres polymères comportant des fonctions chimiques, tel l'anhydride maléique, pouvant réagir avec le polyamide du substrat.
A titre d'exemple on peut citer les mélanges de PA 12 et de copolymères de l'éthylène, d'un (meth)acrylate d'alkyle et de l'anhydride maléique.

Selon une autre forme la couche inférieure est un alliage de polyamide et d'ABS.

**S'agissant plus précisément de la couche centrale**, elle est constituée de copolyamides, de copolymères à blocs polyamides et blocs polyethers, de polyoléfine fonctionnalisée ou de mélanges de polyamide et de polyoléfine fonctionalisée ou de polymères fonctionnalisés avantageusement choisis parmi les styrèniques.

S'agissant des **copolyamides** ils sont constitués de monomères en >=C9 (ayant 9 ou plus de 9 atomes de carbone) du polyamide de la -couche supérieure et de monomères en =<C8 du polyamide de la couche inférieure. Par exemple si la couche supérieure est à base de PA 12 et la couche inférieure à base de PA 6 le copolyamide de la couche centrale est un coPA-6 /12 (copolymère du caprolactame et du lauryllactame).

Selon une forme avantageuse c'est un mélange de 2 copolyamides, l'un majoritaire en monomère en >=C9, l'autre majoritaire en monomère =<C8. Avantageusement le monomère en >=C9 est un monomère présent dans la couche supérieure et le monomère =<C8 est un monomère présent dans la couche inférieure.

Selon une autre forme avantageuse c'est un mélange de 2 copolyamides, l'un majoritaire en monomère en >=C9 et minoritaire en monomère en =<C8, l'autre majoritaire en monomère =<C8 et minoritaire en monomère en >=C9 et ces 2 copolyamides possèdent un comonomère >=C9 identique et/ou un comonomère =<C8 identique. Avantageusement le monomère en >=C9 est un monomère présent dans la couche supérieure et le monomère =<C8 est un monomère présent dans la couche inférieure.

Par exemple si la couche supérieure est à base de PA 11 et la couche inférieure à base de PA 6 le mélange de copolyamides peut être un mélange 50/50 en poids : coPA-12/6 riche en 12 (70% de motifs lauryllactame) + coPA-6/12 riche en 6 (70% de motifs caprolactame).

Par exemple si la couche supérieure est à base de PA 12 et la couche inférieure à base de PA 6 le mélange de copolyamides peut être un mélange 50/50 en poids : coPA-11/6 riche en 11 (70% de motifs aminoundecanoïque acide) + coPA-6/12 riche en 6 (70% de motifs caprolactame).

Par exemple si la couche supérieure est à base de PA 12 et la couche inférieure à base de PA 6 le mélange de copolyamides peut être un mélange 50/50 en poids : coPA-12/6.10 riche en 12 (70% de motifs lauryllactame) + coPA-6.10/6 riche en 6 (80% de motifs caprolactame).

Par exemple si la couche supérieure est à base de PA 12 et la couche inférieure à base de PA 6 le mélange de copolyamides peut être un mélange 50/50 en poids : coPA-12/6 riche en 12 (70% de motifs lauryllactame) + coPA-6/12 riche en 6 (80% de motifs caprolactame).

Selon une variante de la couche centrale constituée d'un mélange de 2 copolyamides elle est remplacée par deux couches adjacentes l'une comprenant le copolyamide majoritaire en monomère en >=C9 disposée contre la couche extérieure et l'autre comprenant le copolyamide majoritaire en monomère en =<C8 disposée contre la couche inférieure.

S'agissant des **copolymères à blocs polyamides et blocs polyethers** c'est plus précisément un mélange d'un copolymère à blocs polyamides et blocs polyethers ayant des blocs polyamides constitués en majorité d'un monomère en >=C9 et d'un autre copolymère à blocs polyamides et blocs polyethers ayant des blocs polyamides constitués en majorité d'un monomère en =<C8. Avantageusement les blocs polyéther sont en PTMG (polytetramethylene glycol).

Par exemple si la couche supérieure est à base de PA 12 et la couche inférieure à base de PA 6 le mélange de copolymères à blocs polyamides et blocs polyethers peut être un mélange 50/50 en poids : copolymère à blocs PA 12 et blocs PTMG + copolymère à blocs PA 6 et blocs PTMG.

Selon une variante de la couche centrale constituée d'un mélange de copolymères à blocs polyamides et blocs polyethers elle est remplacée par deux couches adjacentes l'une comprenant le copolymère à blocs polyamides et blocs polyethers ayant des blocs polyamides constitués en majorité d'un monomère en >=C9 disposée contre la couche extérieure et l'autre comprenant le copolymère à blocs polyamides et blocs polyethers ayant des blocs polyamides constitués en majorité d'un monomère en =<C8 disposée contre la couche inférieure.

S'agissant des **polyoléfines fonctionnalisées ou des mélanges de polyamide et de polyoléfine fonctionalisée** c'est avantageusement un mélange de polyamide avec d'autres polymères, de préférence des polyoléfines, ces autres polymères sont tout ou en partie copolymérisés ou greffés par des fonctions chimiques pouvant réagir avec les polyamides des couches adjacentes. Ces fonctions étant de l'anhydride, de l'epoxyde ou de l'acide, préférentiellement de l'anhydride maléïque.

Si la couche supérieure est à base de PA 11 et la couche inférieure en PA 6 alors la couche centrale peut être un mélange comprenant 70% en poids de la composition de la couche supérieure et 30% d'un copolymère de l'éthylène, d'un (meth)acrylate d'alkyle par exemple l'acrylate de butyle et de l'anhydride maléique.

Selon une autre forme la couche centrale est constituée de polymères de la famille des polypropylènes homopolymère ou copolymères et leurs mélanges et alliages, tout ou en partie greffés anhydride, de préférence l'anhydride maléique.

Selon une autre forme la couche centrale est constituée de polymères de la famille des (co)polyoléfines non essentiellement PP, toutes ou en partie greffées anhydride ou copolymérisées anhydride, de préférence anhydride maléique.

Selon une autre forme la couche centrale est constituée d'au moins un copolymère de l'éthylène, d'un (meth)acrylate d'alkyle ayant de préférence de 4 à 12 atomes de carbone (par exemple l'acrylate de butyle) et de l'anhydride maléique. On ne sortirait pas du cadre de l'invention en remplaçant l'anhydride par l'acide acrylique.

Selon une autre forme la couche centrale est constituée de polymères de la famille des (co)polyoléfines greffées ou copolymérisées à l'époxyde, au GMA en particulier. A titre d'exemple on peut citer les copolymères de l'éthylène, du méthacrylate de glycidyle et éventuellement d'un (meth)acrylate d'alkyle ayant de préférence de 4 à 12 atomes de carbone (par exemple l'acrylate de butyle).

Selon une autre forme la couche centrale est constituée de polymères de la famille des (co)polyoléfines/acétate de vinyle/anhydride maléique. A titre d'exemple on peut citer les copolymères de l'éthylène, de l'acétate de vinyle et de l'anhydride maléique.

S'agissant des **polymères fonctionnalisés** la couche centrale est constituée de polymères greffés anhydride maléique ou autre fonction réactive avec les bouts de chaînes des **PA** des couches adjacentes.

Selon une forme avantageuse la couche centrale est constituée de polymères de la famille des styréniques greffés anhydride maléique ou autre fonction réactive avec les bout de chaînes des PA des couches adjacentes. A titre d'exemple on peut citer les copolymères blocs du type SBS (bloc polystyrène, bloc polybutadiène et bloc polystyrène) éventuellement hydrogénés ces polymères étant greffés par l'anhydride maléique.

**Selon une variante, toujours dans la cas du substrat en polyamide, il n'y a pas de couche intermédiaire (centrale).**

Selon une forme avantageuse la couche inférieure est constituée d'un mélange d'un PA en =<C8 (assure l'adhesion avec substrat PA en =<C8) avec d'autres polymères, de préférence des polyoléfines, ces polymères étant tout ou en partie copolymérisés ou greffés par des fonctions chimiques pouvant réagir avec les polyamides en >=C9 de la couche supérieure, ces fonctions étant de l'anhydride, de l'époxyde ou de l'acide, préférentiellement de l'anhydride maléïque.

Par exemple si la couche supérieure est à base de PA 11 et la couche inférieure en PA 6 alors la couche inférieure peut être un mélange comprenant 65% en poids de PA 6, 25% d'HDPE et 10% de polyéthylène greffé par l'anhydride maléique (PE-g-MAH). Le PA6 ne colle pas sur le PA11, c'est le PE-g-MAH qui collera sur le PA11).

Selon un autre forme avantageuse la couche inférieure est constituée d'un mélange d'un PA en >=C9 (assurera adhésion avec la couche supérieure en PA >=C9) avec d'autres polymères, de préférence des polyoléfines, ces polymères étant tout ou en partie copolymérisés ou greffés par des fonctions chimiques pouvant réagir avec les polyamides en =<C8 du substrat, ces fonctions étant de l'anhydride, de l'époxyde ou de l'acide, préférentiellement de l'anhydride maléïque.

Par exemple si la couche supérieure est à base de PA 11 et la couche inférieure en PA 6 alors la couche inférieure peut être un mélange comprenant en poids 70% de la composition de la couche supérieure et 30% d'un copolymère de l'éthylène, de l'acrylate de butyle et de l'anhydride maléique (le PA11 ne colle pas sur le PA6, c'est le copolymère au MAH qui collera sur le PA6).

Selon une autre forme avantageuse la couche inférieure est constituée de polymères (de préférence des polyoléfines et mieux encore du polypropylène homopolymère ou copolymère) tout ou en partie copolymérisés ou greffés par des fonctions chimiques pouvant aussi réagir avec les polyamides du substrat, ces fonctions étant de l'anhydride, de l'époxyde ou de l'acide, préférentiellement de l'anhydride maléïque. Il est avantageux que ces polymères aient une T° de fusion proche de celle de la couche supérieure, c'est à dire que l'écart est de moins de 50°C d'écart et de préférence de moins de 25°C.

Selon une autre forme avantageuse la couche inférieure est constituée d'un mélange de coPA (copolyamide) en <C8 (dont le nombre de groupes méthylène CH2 par rapport au nombre de groupes amide NCO est < 8) ; ces coPA adhérant sur les PA <C8) et de coPA en >=C9 (dont le nombre de groupes méthylène CH2 par rapport au nombre de groupes amide NCO est >=9) assurera l'adhésion avec substrat PA en >=C9 ; ces coPA adhérant sur les PA >=C9 et étant compatibles avec les coPA <C8. Afin que la couche inférieure ait un point de fusion suffisamment haut et proche de la couche supérieure, on prendra une proportion majoritaire de coPA riche en monomère <C8 et chacun des coPA possèdera un monomère suffisament majoritaire pour que la T° de fusion de ces coPA ne soit pas différente de plus de 50°C, préf. de 25°C, de celui de la couche supérieure.

Par exemple si la couche supérieure est à base de PA 12 et le substrat à base de PA 6 le mélange de copolyamides peut être un mélange 50/50 en poids : coPA-12/6 riche en 12 (70% de motifs lauryllactame) + coPA-6/12 riche en 6 (70% de motifs caprolactame).

**On considère maintenant le substrat en polymère styrènique**. A titre d'exemple de polymère styrènique on peut citer le polystyrène, le polystyrène modifié par des élastomères, les copolymères du styrène et de l'acrylonitrile (SAN), le SAN modifié par des élastomères en -particulier l'ABS qu'on obtient par exemple par greffage (graft-polymérisation) de styrène et d'acrylonitrile sur un tronc de polybutadiène ou de copolymère butadiène-acrylonitrile, les mélanges de SAN et d'ABS. Les élastomères mentionnés ci dessus peuvent être par exemple l'EPR (abréviation d'éthylène-propylène-rubber ou élastomère éthylène-propylene), l'EPDM (abréviation d'éthylène-propylene-diène rubber ou élastomère éthylène-propylene-diène), le polybutadiène, le copolymère acrylonitrile-butadiène, le polyisoprène, le copolymère isoprène-acrylonitrile.

Dans les polymères qu'on vient de citer une partie du styrène peut être remplacée par des monomères insaturés copolymèrisables avec le styrène, à titre d'exemple on peut citer l'alpha-methyistyrène et les esters (meth)acryliques. Comme exemples des copolymères du styrène, on peut encore citer le chloropolystyrène, le poly-alpha-méthylstyrène, les copolymères styrène-chlorostyrène, les copolymères styrène-propylène, les copolymères styrène-butadiène, les copolymères styrène-isoprène, les copolymères styrène-chlorure de vinyle, les copolymères styrène-acétate de vinyle, les copolymères styrène-acrylate d'alkyle (acrylate de méthyle, d'éthyle, de butyle, d'octyle, de phényle), les copolymères styrène - méthacrylate d'alkyle (méthacrylate de méthyle, d'éthyle, de butyle, de phényle), les copolymères styrène-chloroacrylate de méthyle et les copolymères styrène - acrylonitrile - acrylate d'alkyle. Dans ces copolymères, la teneur en comonomères va généralement jusqu'à 20% en poids. La présente invention concerne aussi des polystyrènes metallocènes à haut point de fusion. On ne sortirait pas du cadre de l'invention si c'était un mélange de deux ou plusieurs-des polymères précédents. Ces polymères peuvent être chargés de fibres de verre et minéraux. Ces polymères peuvent être mélangés avec du polycarbonate (PC).

**La** couche inférieure est choisie parmi les mêmes polymères que le substrat, couche centrale est constituée de polymère(s) jouant le rôle de liant des 2 autres couches.

**S'agissant plus précisément de la couche inférieure**, elle est avantageusement en ABS ou MABS. Selon une autre forme elle est en mélange de polycarbonate et d'ABS.

**S'agissant de la couche centrale**, elle peut être un polyamide ayant un momomère de la famille de la pipérazine, une polyoléfine fonctionnalisée, un polymère styrénique fonctionnalisé, un polymère acrylique ou un polyuréthane.

S'agissant du **polyamide ayant un momomère de la famille de la piperazine**, on désigne par momomère de la famille de la pipérazine les diamines de formule suivante : 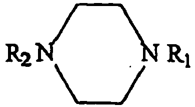 dans laquelle :
R₁ représente H ou -Z1-NH2 et Z1 représente un alkyle, un cycloalkyle ou un aryle ayant jusqu'à 15 atomes de carbone,
et R₂ représente H ou Z2-NH2 et Z2 représente un alkyle, un cycloalkyle ou un aryle ayant jusqu'à 15 atomes de carbone,
R₁ et R₂ pouvant être identiques ou différents.

Selon une forme avantageuse c'est un copolyamide résultant de la condensation d'un monomère de la famille de la pipérazine, d'un diacide et d'un lactame ou d'un acide alpha-omega-aminocarboxylique.

Par exemple si la couche supérieure est à base de PA 11 et la couche inférieure en ABS la couche centrale est en coPA-PIP.10/12 (condensation de la pipérazine, du diacide en C10 (acide sébacique) et du lauryllactame.

S'agissant des **polyoléfines fonctionnalisées** la couche centrale est constituée d'un copolymère d'éthylène, d'acrylate d'alkyle et d'un tiers monomère donnant un groupe carbonyl, le tout préférentiellement fonctionnalisé anhydride maléique.

Par exemple si la couche supérieure est à base de PA 11 et la couche inférieure en ABS la couche centrale est en E/BA/CO fonctionnalisé MAH (copolymère de l'éthylène, de l'acrylate de butyle et de l'oxyde de carbone et greffé par l'anhydride maléique.

Selon une autre forme la couche centrale est constituée d'un ou plusieurs copolymères type E/VA/MAH (éthylène, acétate de vinyle, anhydride maléique) ou E/VA fonctionnalisé anhydride, epoxyde ou pair un autre groupe chimique susceptible de réagir avec les bouts de chaînes amine et / ou acide du polyamide de la couche supérieure.

Par exemple si la couche supérieure est à base de PA 11 et la couche inférieure en ABS la couche centrale est en E/VA/MAH (Orevac^{®} 9314 (10% en poids d'acétate de vinyle) ou Orevac^{®} 9304 (25% en poids d'acétate de vinyle)).

Selon une autre forme la couche centrale est constituée d'un ou plusieurs copolymères type éthylène/(meth)acrylate d'alkyle/anhydride maléique ou éthylène/(meth)acrylate d'alkyle gréffé anhydride, epoxyde ou par un autre groupe chimique susceptible de réagir avec les bouts de chaînes amine et / ou acide du polyamide de la couche supérieure. Parmi les acrylate d'alkyle, on préfère ceux avec des alkyl légers tel le MA (acrylate de méthyle), et à forte teneur (> 20% en poids du copolymère).

Par exemple si la couche supérieure est à base de PA 11 et la couche inférieure en ABS la couche centrale est en éthylène/MA/GMA (25%MA, 8%GMA) GMA désignant le méthacrylate de glycidyle.

S'agissant des **polymères styréniques fonctionnalisés** la couche centrale est constituée d'un ou plusieurs polymères styréniques fonctionnalisés anhydride maléique ou par un autre groupe chimique susceptible de réagir avec les bouts de chaînes amine et / ou acide du polyamide de la couche supérieure.

Par exemple si la couche supérieure est à base de PA 11 et la couche inférieure en ABS la couche centrale est en SMA (Bayer^{®} Cadon). SMA désigne un copolymère du styrène et de l'anhydride maléique.

S'agissant des **polymères acryliques** la couche centrale est constituée d'un ou plusieurs polymères acryliques copolymérisés ou greffés anhydride maléique, acide acrylique ou par un autre groupe chimique susceptible de réagir avec les bouts de chaînes amine et / ou acide du polyamide de la couche supérieure.

Par exemple si la couche supérieure est à base de PA 11 et la couche inférieure en ABS la couche centrale est en PMMA/AA/MAH c'est à dire un PMMA ayant des fonctions acide et des fonctions anhydride d'acide (oroglas HT 121).

Selon une autre forme la couche centrale est constituée d'un ou plusieurs polymères de type core-shell (coeur-écorce), tel un tout acrylique PMMA (shell) Acrylate de butyle(core)comme le Paralloid^{®} EX3300 de Rohm & Haas, le Paralloid^{®} EXL3847 acrylique (shell) et MBS (core) ou le Paralloid EXL 3691. MBS désigne les copolymères du méthacrylate de méthyle, du butadiène et du styrène.

Par exemple si la couche supérieure est à base de PA 11 et la couche inférieure en ABS la couche centrale est en core-shell EXL3847.

S'agissant des polyuréthanes la couche centrale est constituée d'un ou plusieurs polymères TPU, éventuellement mélangé à des PEBA, des ABS ou MABS. TPU désigne des polyuréthanes thermoplastiques. ces TPU sont constitués de blocs polyethers souples qui sont des restes de polyetherdiols et de blocs rigides (polyuréthanes) qui résultent de la réaction d'au moins un diisocyanate avec au moins un diol court. Le diol court allongeur de chaîne peut être choisi dans le groupe constitué du neopentylglycol, du cyclohexanediméthanol et des glycols aliphatiques de formule HO(CH₂)ₙOH dans laquelle n est un entier valant de 2 à 10. Les blocs polyuréthanes et les blocs polyéthers sont reliés par des liaisons résultant de la réaction des fonctions isocyanates avec les fonctions OH du polyétherdiol. On peut encore citer les polyesteruréthannes par exemple ceux comprenant des motifs diisocyanates, des motifs dérivés de polyesters diols amorphes et des motifs dérivés d'un diol court allongeur de chaîne. Ils peuvent contenir des plastifiants. Le TPU peut être en mélange avec des copolymères à blocs polyamides et blocs polyéthers et/ou des résines styréniques.

Par exemple si la couche supérieure est à base de PA 11 et la couche inférieure en ABS la couche centrale est en TPU à base d'ether Elastollan^{®} 1185A.

**Selon une variante; toujours dans la cas du substrat en polymère styrénique, il n'y a pas de couche intermédiaire (centrale).** La couche inférieure à une température du fusion proche de celle de la couche supérieure, la différence ne doit pas excéder 50°C, de préférence 25°C.

Selon une forme avantageuse la couche inférieure est coristituée d'un ou plusieurs polymères styréniques, préférentiellement ABS ou SAN ou ASA (copolymère de l'acrylonitrile, du styrène et d'un acrylate d'alkyle), tout ou en partie fonctionnalisés par un groupe chimique susceptible de réagir avec une groupe amine (ou acide carboxylique) de polyamide, tel l'anhydride ou l'époxyde, préférentiellement l'anhydride maléique.

Par exemple si la couche supérieure est à base de PA 11 et le substrat en ABS la couche inférieure est un mélange d'ABS et d'ABS greffé par l'anhydride maléique.

Selon une autre forme la couche inférieure est constituée d'un mélange de polyamides >= C9 avec 10 à 50% d'un ou plusieurs polymères styréniques, préférentiellement ABS ou SAN ou ASA, tout ou en partie fonctionnalisés par un groupe chimique susceptible de réagir avec une groupe amine (ou acide carboxylique) de polyamide, tel l'anhydride ou l'époxyde, préférentiellement l'anhydride maléique.

Selon une autre forme la couche inférieure est constituée d'un mélange de polyamides >= C9 avec 10 à 50% d'un ou plusieurs copolymères de l'éthylene et d'un monomère polaire type acrylate d'alkyle ou acétate de vinyle, tout ou en partie fonctionnalisés (par copolymérisation ou greffage) par un groupe chimique susceptible de réagir avec un groupe amine (ou acide carboxylique) de polyamide, tel l'anhydride ou l'époxyde, préférentiellement l'anhydride maléique.

Par exemple si la couche supérieure est à base de PA 11 et le substrat en ABS la couche inférieure est en E/VA/MAH (Orevac^{®} 9304 ,25% en poids d'acétate de vinyle).

Selon une autre forme la couche inférieure est constituée d'un alliage de polyamides >= C9 avec 10 à 50% d'un ou plusieurs copolyamides comprenant un monomère de la famille de la pipérazine.

Par exemple si la couche supérieure est à base de PA 11 et le substrat en ABS la couche inférieure est un mélange à 65% en poids de PA 11 et de 35% coPA-PIP.10/12.

Selon une autre forme la couche inférieure est constituée de copolyoléfines polaires à l'acrylate d'alkyle ou à l'acétate de vinyle, toutes ou en partie fonctionnalisées ou copolymérisées avec de l'anhydride, par exemple de l'anhydride maleique, de l'époxyde ou tout autre groupe pouvant réagir avec les bouts de chaines amines ou acides du de la couche supérieure polyamide. On préfère les forte teneur en acrylate d'alkyle ou acétate de vinyle. On préfère parmi les acrylates d'alkyle ceux aux acrylates légers comme l'acrylate de méthyle.

Par exemple si la couche supérieure est à base de PA 11 et le substrat en ABS la couche inférieure est un éthylène/MA/GMA (25%MA, 8%GMA) GMA désignant le méthacrylate de glycidyle.

Selon une autre forme la couche inférieure est constituée d'un ou plusieurs polymères TPU, éventuellement mélangé à des copolymères à blocs polyamide et blocs polyéther ou ABS ou MABS.

**S'agissant de la réalisation des structures de l'invention,** elles sont réalisées avantageusement par coextrusion. avantageusement la structure est ensuite surmoulée, càd placée dans le moule d'une presse à injecter où un substrat polymère sera injecté sur la couche inférieure, la couche supérieure étant disposée contre la paroi du moule. Avantageusement la structure sera d'abord thermoformée, puis surmoulée, càd placée dans le moule d'une presse à injecter où un substrat polymère sera injecté sur la couche inférieure.

Ensuite on fait adhérer la structure sur un substrat lors d'une opération réalisée à chaud, dans le but d'obtenir une pièce finie suffisamment épaisse et/ou rigide pour être utilisée.

La couche centrale peut être elle même constituée de plusieurs couches adhérent les unes sur les autres et dont les couches extrêmes adhérent respectivement sur les couche supérieure et inférieure.

Concernant les techniques d'association de la structure avec les substrats, on peut encore citer la lamination, le pressage à chaud.

Les polymères des différentes couches sont avantageusement choisis parmi ceux aptes à l'extrusion de feuille, c'est à dire typiquement des polymères assez visqueux, donc de masse moléculaire assez élevée.

Dans le cas d'une décoration par sublimation, la face sublimée est typiquement préalablement flammée, afin que par la suite l'adhésion sur le substrat soit meilleure.

Les épaisseurs des couches sont par exemple 200 / 300 / 100 µm. On peut bien évidement faire varier ces épaisseurs pour ajuster le compromis de propriétés. On peut par exemple augmenter l'épaisseur de la couche centrale pour augmenter la souplesse, ou faire l'inverse.

### [Exemples]

### [Exemples]

On a utilisé les produits suivants :

| | |
|---|---|
| BESN0 24 TLCC | PA 11 (Atofina Rilsan BESN0 24 TL CC) |
| PA12 | polyamide-1 2 de Mw (masse en poids) 50000g environ ; Atofina Rilsan AESN0 TL |
| PA11 | polyamide-11 de Mw (masse en poids) 30000g environ ; Atofina Rilsan BESN0 TL |
| PA-10.12 | polyamide-10.12 |
| CX7323 | Degussa Vestamid CX7323 |
| PA-PACM.12 | polyamide-PACM.12 type Degussa Trogamid CX7323 |
| TR90LX | Ems Grilamid TR90LX |
| TR90UV | Ems Grilamid TR90UV |
| PA-BMACM.12 | polyamide-BMACM.12, aussi appelé polyamide-MACM.12 |
| PA11 n°6 | Composition comprenant : |
| | 65 parties de polyamide 11 de *M̅w̅* 45000 à 55000, 25 parties de IPDA.10112 produit de condensation de l'isophorone diamine de l'acide en C 10 (sébacique) et du lauryllactame. 10 parties d'un copolymère à blocs PA 12 de *M̅n̅* 5000 et blocs PTMG de *M̅n̅* 650 et de MFI 4 à 10 (g/10 min à 235°C sous 1 kg). |
| | avec en plus 0.2 part de stabililisant Ciba Tinuvin 312 et 0.2 part de Ciba Tinuvin 770 |
| PP-n°1 | Polypropylene de MFI 230°C 2.16 kg = 2 (Appryl 3020GN3) |
| PPg | Polypropylene greffé anhydride maléique à 1% (Atofina Orevac CA100) |
| PPg18728 | polypropylène greffé MAH Atofina Orevac 18729 |
| coPP-n°1 | polypropylène copolymère Atofina PPC 3640 |
| PP1 | polypropylène Atofina PPH10060 |
| PP GF | polypropylene chargé 30% fibre de verre |
| MB1-gris | mélange maître gris métallique Clariant PLS2130026 sur base PE |
| pP GFL | Polypropylène charge fibre de verre longue: Atofina Pryltex V4030 HL 12 |
| PEg | polyéthylène densité 910, MFI 190°C 2.16kg =4, greffé à 1% d'anhydride maléique |
| PE-n°1 | polyéthylène densité 910, MFI 190°C 2.16kg =4 |
| PEg18370 | polyéthylène greffé MAH Atofina Orevac 18370 |
| E/EHA/MAH | copolyéthyléne / acrylate de 2-ethyle hexyle 30% masse / anhydride maléïque 1.5% masse de MFI 190°C 2.16 kg = 5.5 |
| coPA6J66 C4 | copolyamide-6/66 BASF Ultramid C4, température de fusion 195°C |
| Alliage PA6/PE | Orgalloy LE60LM, température de fusion 220°C |
| Alliage coPA6/PE | alliage à matrice coPA6/66, Atofina Orgalloy LEC601, température de fusion 195°C |
| MB2-gris | mélange maître gris métallique Clariant AES3132003 sur base coPA6/66 |
| PA6 GF | polyamide 6 chargé fibre de verre (20%) et minéral (20%), DSM Akulon HGM 44 |
| coPA12/PTMG | copolymère à blocs PA 12 et blocs PTMG, atofina Pebax 5533 SA01- |
| coPA6/PTMG | copolymére à blocs PA 6 et blocs PTMG, atofina Pebax 1878 SA01 |
| E/BA/MAH | copolyéthylène / acrylate n-butyle 6% masse / anhydride maléïque 3% masse de MFI 190°C 2.16 kg = 5 |
| EN AIMAH | copolyéthylène / acétate de vinyl 14% masse /anhydride maléique 1.5% masse de MFI 190°C 2.16 kg = 2 |
| coPA-PIP.10/12 | copolyamide pipérazine.10/12 contenant 20% en poids de motifs auryllactame. |
| E/BA/CO | copolyethylène / acrylate de butyle / carbonyl fonctionnalisé MAH, Dupont Fusabond MG 423 D |
| 9304 | copolyéthylène / acétate de vinyl 26% masse / anhydride maléïque 1.5% masse de MFI 190°C 2.16 kg = 7 |
| E/MA/GMA | copolyethylène / acrylate de méthyl (30%masse) / méthacrylate de glycidyle (8% masse), MFI 190°C, 2.16kg = 5 |
| SMA | copolymère de styrène et d'anhydride maléique type Bayer Cadon |
| PMMA-A | copolymère de métacrylate de méthyle et d'acide acrylique, Atoglas oraglas HT121 |
| EXL3847 | Core-shell acrylique Rohm & Hass Paralloid EXL3847 |
| TPU1185A | polyuréthane Elastogran Elastollan 1185A |
| TPUC90A | polyuréthane Elastogran Elastollan C90A |
| ABS | Acrylonitrile Butadiene Styrène |
| ABS-g-MAH | Acrylonitrile Butadiene Styrène greffé anhydride maléique |
| MABS | copolymère methacrylate/acrylonitrile/butadiene/styrene BASF Terlux 2802 TR |
| Triax | Alliage ABS. Bayer Triax 1120 |

paramètres figurant dans les tableaux :

| | |
|---|---|
| Couche sup. | couche supérieure de la structure, face extérieure |
| Couche inf. | couche inférieure de lastructure, face collée sur le substrat |
| Tenue rayure | aptitude à résister à la rayure et à conserver un aspect brillant |
| Tenue choc | aptitude à résister à un choc, un coup de carre, une forte vibration, en particulier à basse température |
| Souplesse | souplesse de la feuille |
| Subli. | aptitude à se décorer aisément par sublimation (bon transfert des pigments, décor bien net) |
| Sérig. | aptitude à bien coller avec les encres de sérigraphie |
| Tenue UV | aptitude à résister au rayonnement UV |
| Tenue fluage | aptitude à supporter les diverses opérations à chaud lors de la fabrication d'un objet, cela sans déformation rédhibitoire de la structure |

| | |
|---|---|
| +++=très satisfaisant ; ++= satisfaisant ; + = assez satisfaisant ;0= moyen ;-= assez insatisfaisant ; --= insatisfaisant ; - - -= très insatisfaisant c signifie comparatif | |

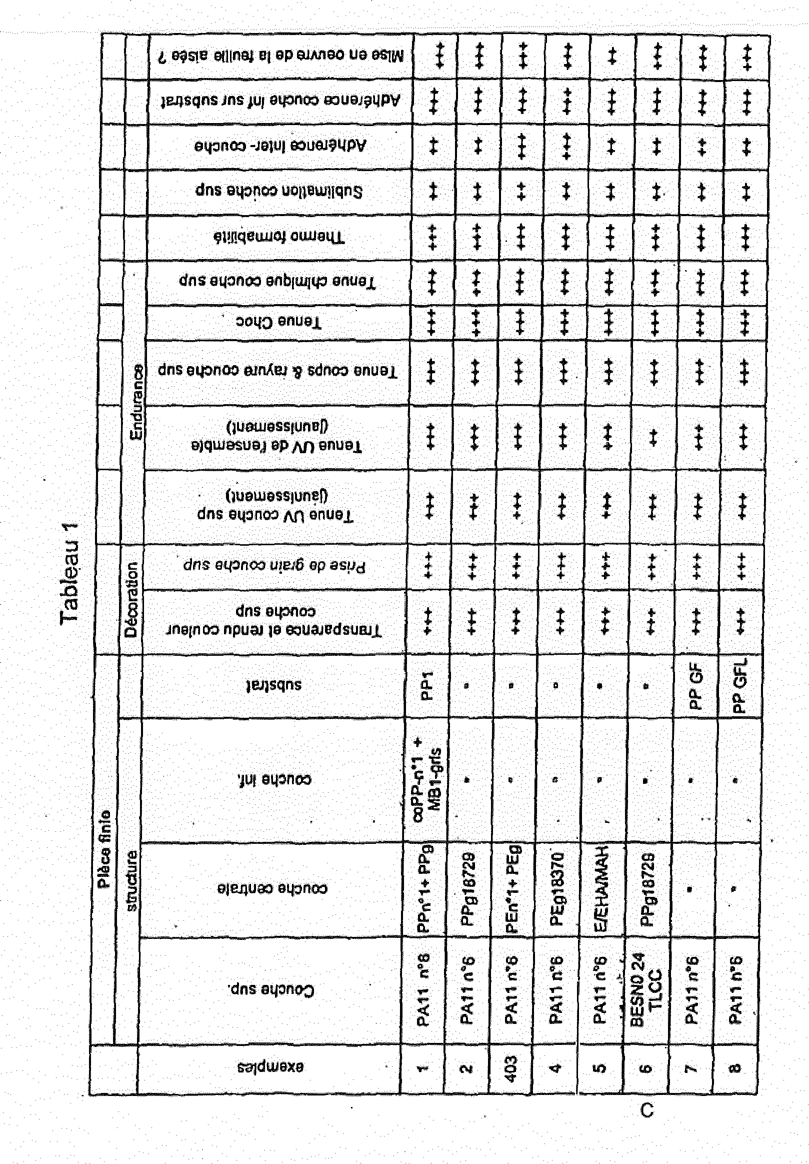

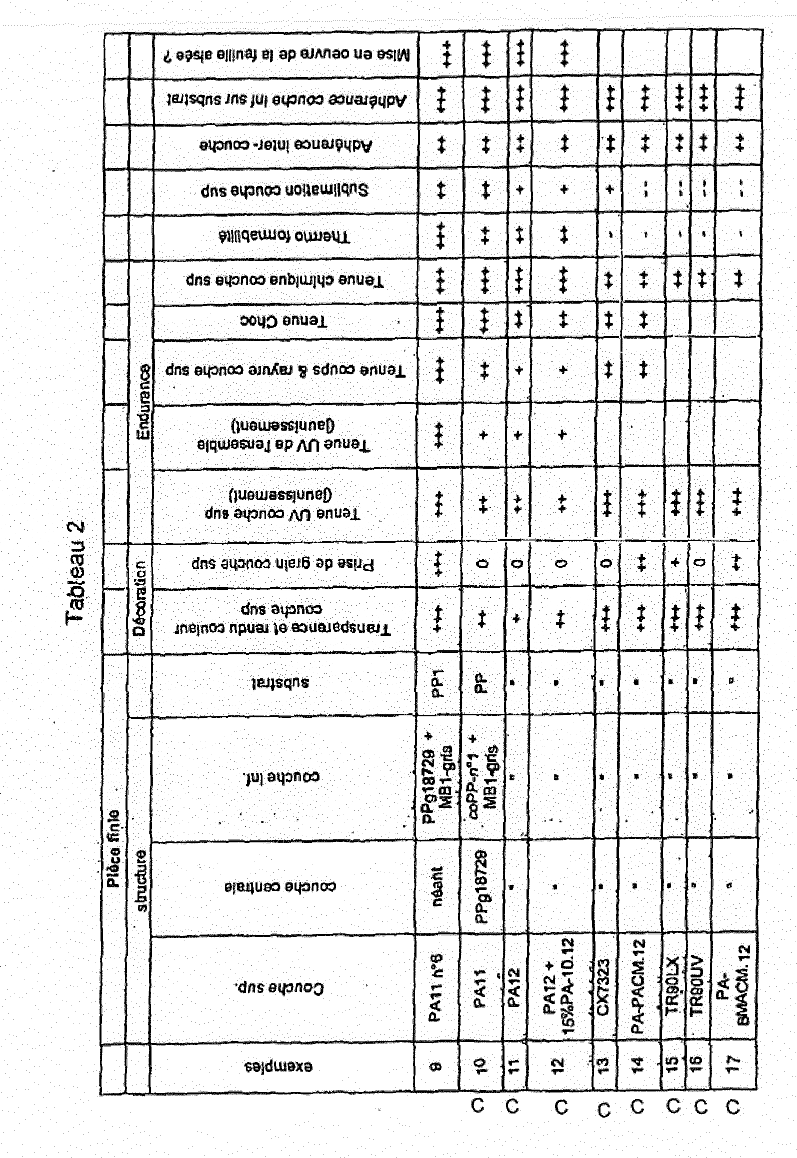

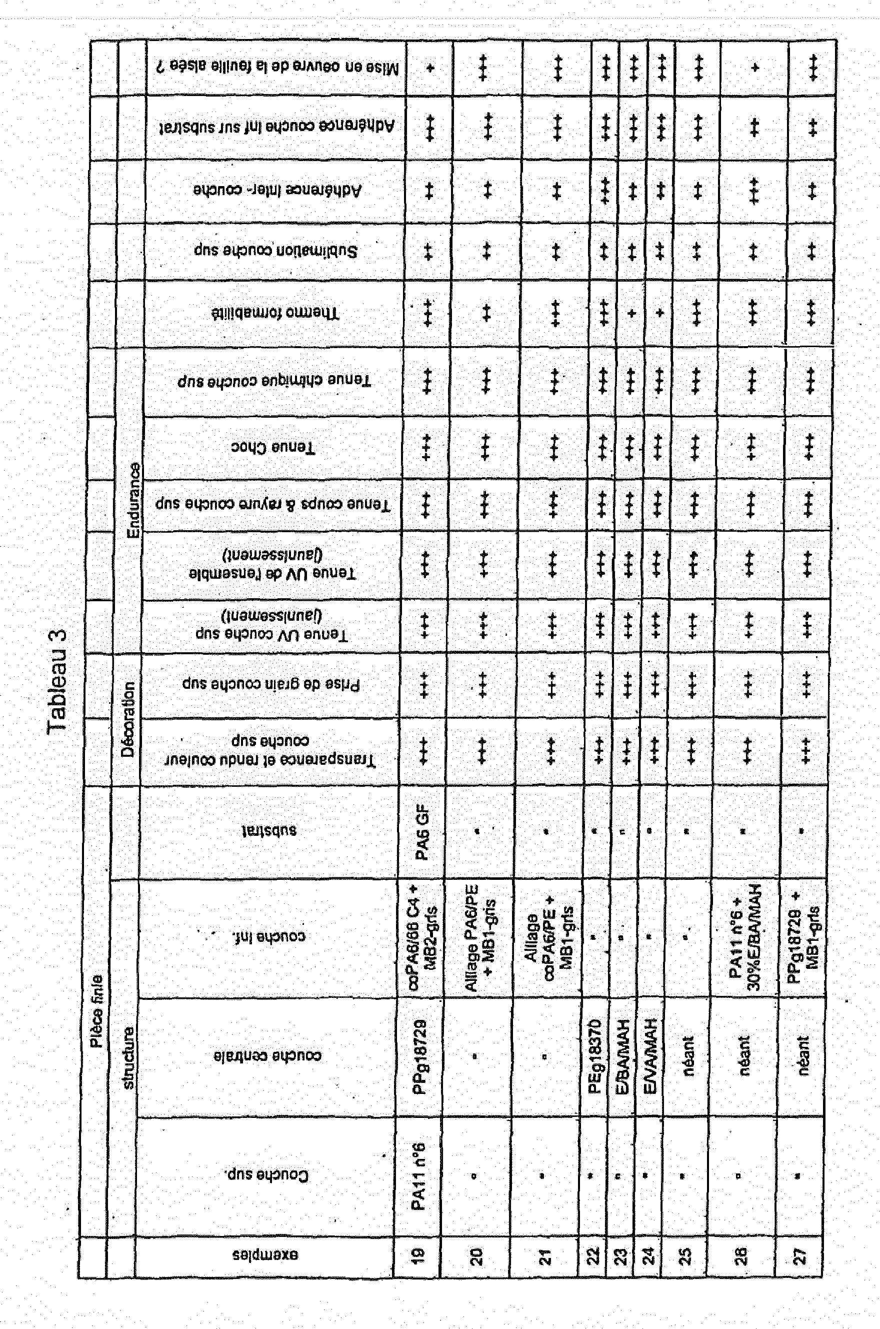

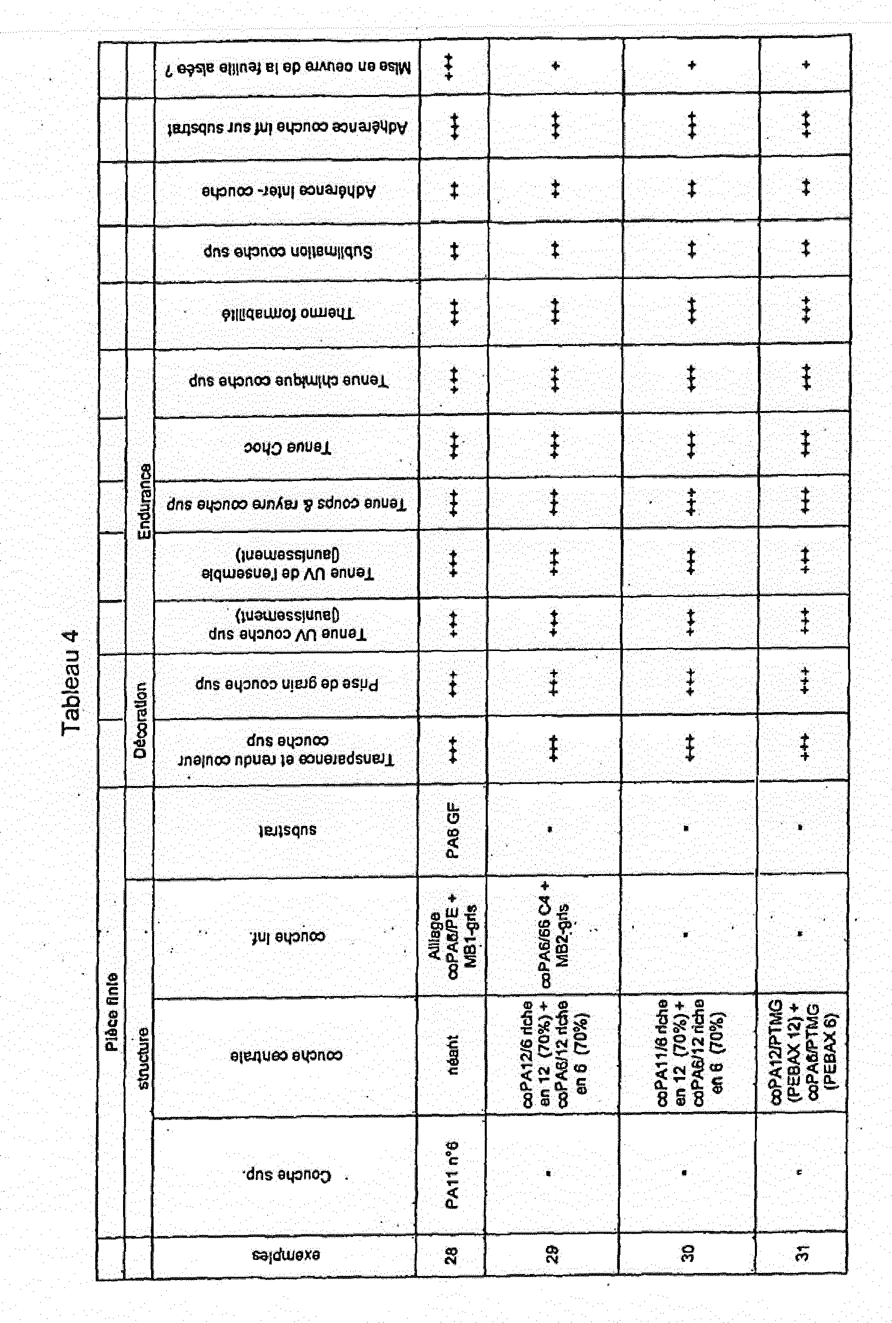

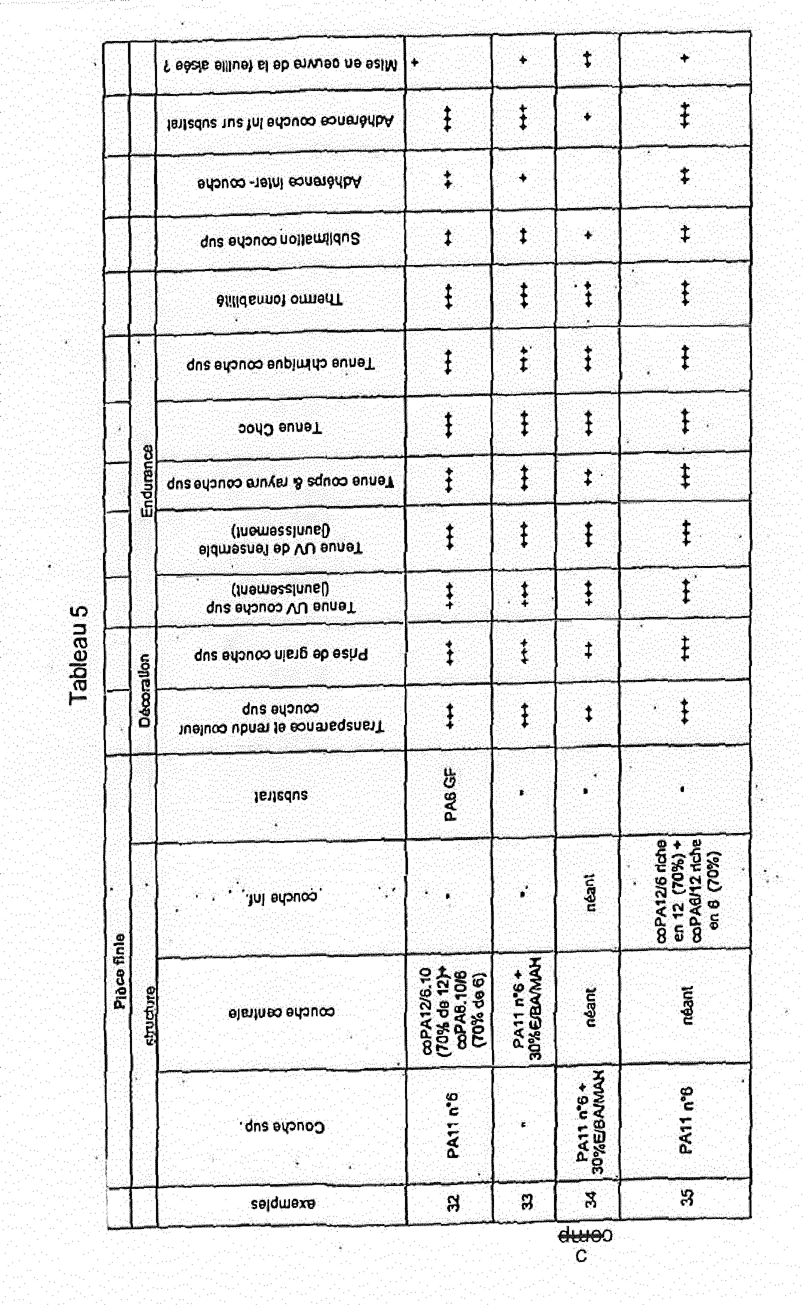

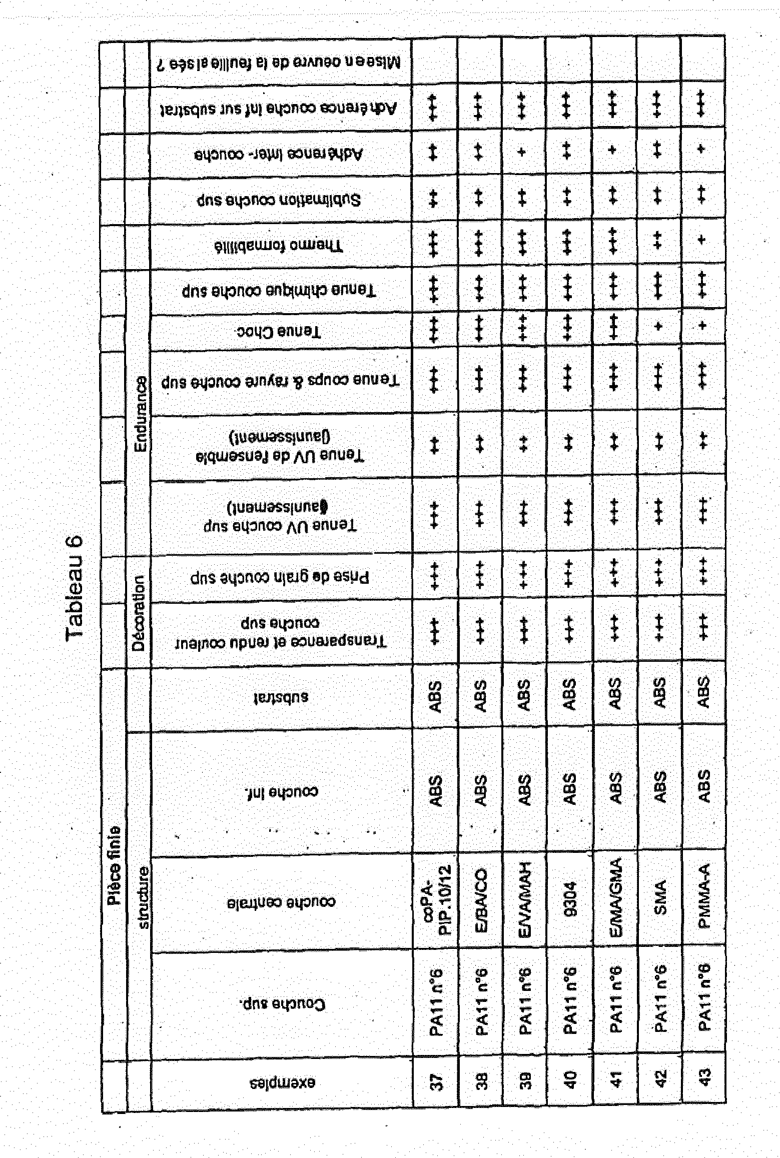

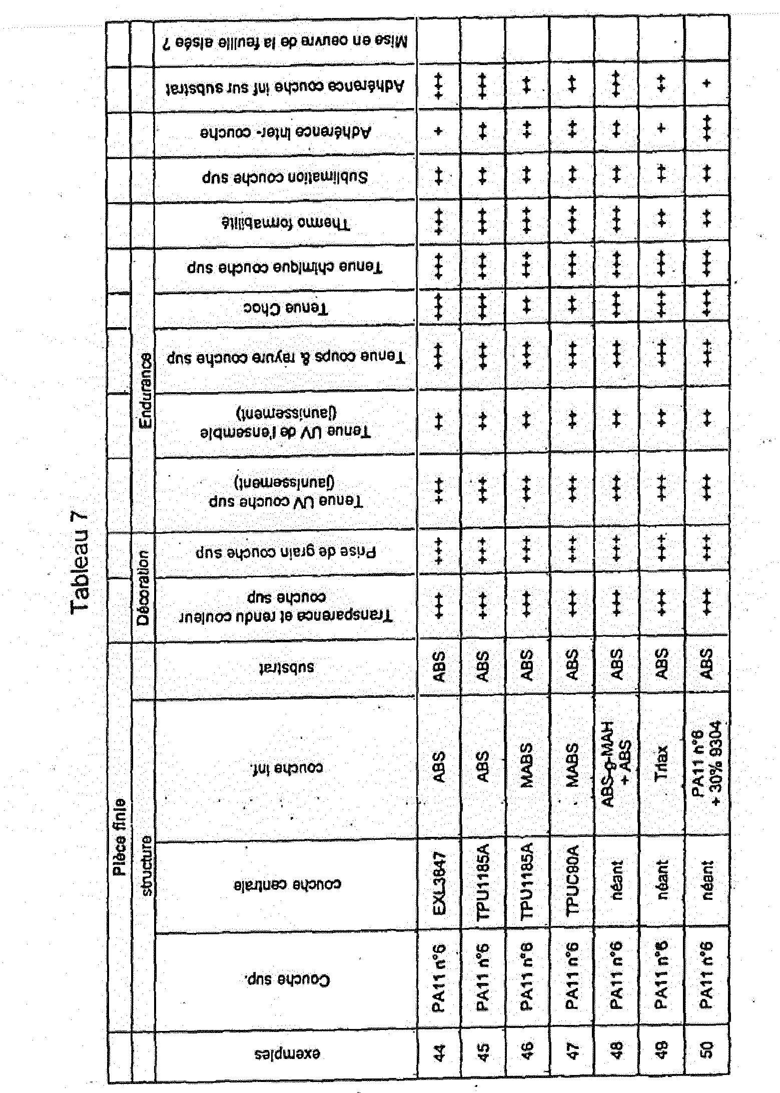

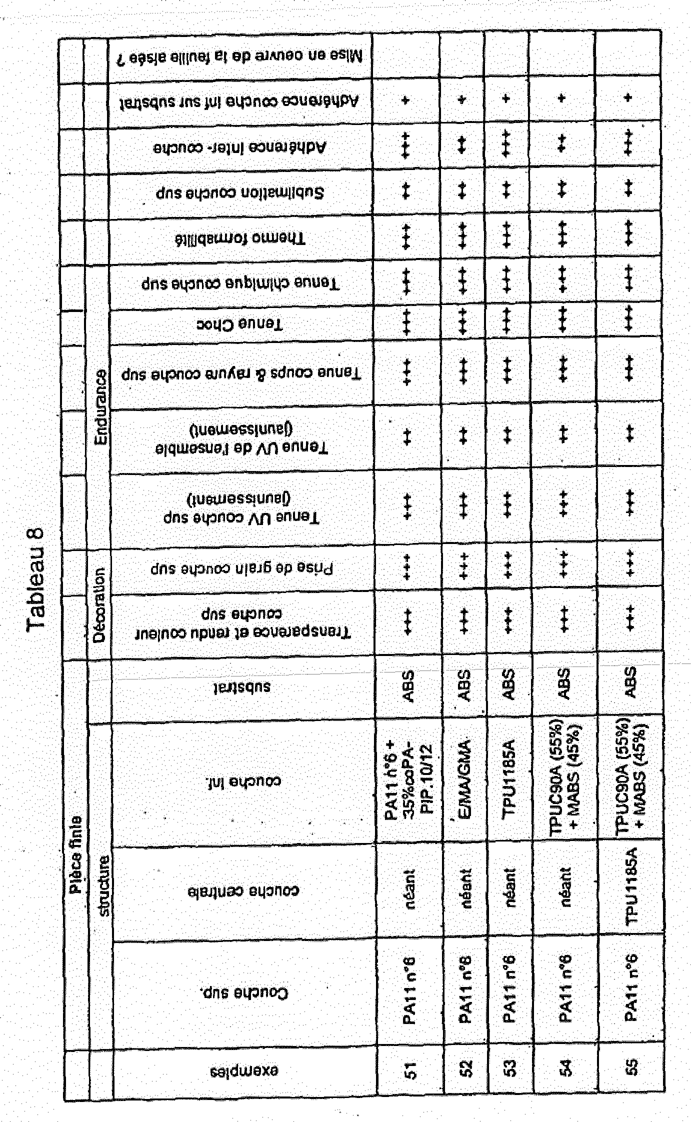

## Revendications

1. Structure multicouche à base de polyamides destinée à être solidarisée à un substrat, ledit substrat étant en polypropylène, en PA6 ou en PA6.6, ou en polymère styrènique tel que l'ABS, **caractérisée en ce que** ladite structure comprend successivement :
- une couche supérieure en polyamides transparents, c'est-à-dire présentant une transparence supérieure ou égale à 50%, avantageusement à 80% de transmission lumineuse sur un objet d'épaisseur 2mm à une longueur d'onde de 560nm (cf ISO 13468), lesdits polyamides provenant de la condensation :
- soit d'un lactame ou d'un alpha-omega-aminoacide ayant au moins 9 atomes de carbone,
- soit d'une diamine et d'un diacide, l'un au moins ayant au moins 9 atomes de carbone, lesdits polyamides étant micro-cristallins,
les polyamides micro-cristallins étant ceux dont la Tg (température de transition vitreuse) est comprise entre 40°C et 90°C, et la Tf (température de fusion) est comprise entre 150°C et 200°C, et le taux de cristallinité est supérieur à 10% (1^{ère} chauffe de DSC selon ISO 11357 à 40°C/min), et l'enthalpie de fusion > 25J/g (1^{ère} chauffe de DSC selon ISO 11357 à 40°C/min),
- une couche inférieure capable d'adhérer à chaud, en fondu, chimiquement ou physiquement sur ledit substrat,
- éventuellement une couche intermédiaire (appelée aussi couche centrale) de liant disposée entre la couche supérieure et la couche inférieure,
et **en ce que** les températures de fusion ou de transition vitreuse des différentes couches ont un écart de l'ordre de 25 à 50°C au plus pour permettre à la structure d'être aisément mise en forme sous l'effet de la température, notamment par thermoformage ou formage durant le surmoulage.

2. Structure selon la revendication 1, dans laquelle les polyamides micro-cristallins sont une composition transparente comprenant en poids, le total étant 100%:
- 5 à 40% d'un polyamide amorphe (B) qui résulte essentiellement de la condensation:
soit d'au moins une diamine choisie parmi les diamines cycloaliphatiques et les diamines aliphatiques et d'au moins un diacide choisi, parmi les diacides cycloaliphatiques et les diacides aliphatiques, l'un au moins de ces motifs diamines ou diacides étant cycloaliphatique,
soit d'un acide alpha oméga amino carboxylique cycloaliphatique,
soit d'une combinaison de ces deux possibilités,
et éventuellement d'au moins un monomère choisi parmi les acides alpha oméga amino carboxyliques ou les éventuels lactames correspondants, les diacides aliphatiques et les diamines aliphatiques,
- 0 à 40% d'un polyamide souple (C) choisi parmi les copolymères à blocs polyamides et blocs polyether et les copolyamides,
- 0 à 20% d'un compatibilisant (D) de (A) et (B),
- 0 à 40% d'un modifiant souple (M),
- avec la condition que (C)+(D)+(M) est compris entre 0 et 50%,
- le complément à 100% d'un polyamide (A) semi cristallin.

3. Structure selon la revendication 1 dans laquelle les polyamides micro-cristallins sont une composition transparente comprenant en poids, le total étant 100 %:
- 5 à 40% d'un polyamide amorphe (B) qui résulte essentiellement de la condensation d'au moins une diamine éventuellement cycloaliphatique, d'au moins un diacide aromatique et éventuellement d'au moins un monomère choisi parmi : les acides alpha oméga amino carboxyliques, les diacides aliphatiques, les diamines aliphatiques,
- 0 à 40% d'un polyamide souple (C) choisi parmi les copolymères à blocs polyamides et blocs polyether et les copolyamides,
- 0 à 20% d'un compatibilisant (D) de (A) et (B),
- (C)+(D) est compris entre 2 et 50%
- avec la condition que (B)+(C)+(D) n'est pas inférieur à 30%, le complément à 100% d'un polyamide (A) semi cristallin.

4. Structure selon la revendication 2 ou 3 dans laquelle le polyamide (A) est le PA 11 ou le PA 12.

5. Structure selon l'une quelconque des revendications précédentes dans laquelle les polyamides de la couche supérieure sont tels que le rapport de bouts de chaîne [NH2]/[COOH] est > 1.

6. Structure selon l'une quelconque des revendications 1 à 5 dans laquelle les températures de fusion ou de transition vitreuse écart de l'ordre de 25 à 50°C au plus pour permettre à la structure d'être aisément mis en forme à chaud, lors de l'opération de thermoformage.

7. Objet constitué d'un substrat recouvert de la structure selon l'une quelconque des revendications précédentes, la couche inférieure de la structure étant disposée contre le substrat, **caractérisé en ce que** le substrat est soit en PP (polypropylène), soit en PA6 ou PAG.6, soit en polymère styrènique.

8. Objet selon la revendication 7, **caractérisé en ce que** le support est en polypropylène, en PA6 ou en polymère styrènique renforcés par des fibres de verre ou des charges minérales.

## Patentansprüche

1. Mehrschichtstruktur auf Basis von Polyamiden zur Befestigung auf einem Substrat, wobei das Substrat aus Polypropylen, PA6 oder PA6,6 oder einem Styrolpolymer wie ABS ist, **dadurch gekennzeichnet, daß** die Mehrschichtstruktur nacheinander folgendes umfaßt:
- eine obere Schicht aus transparenten, d.h. eine Transparenz größer gleich 50%, vorteilhafterweise 80%, Lichttransparenz an einem Objekt mit einer Dicke von 2 mm bei einer Wellenlänge von 560 nm (s. ISO 13468) aufweisenden,
Polyamid aus der Kondensation ergibt:
entweder eines Lactams oder einer alpha,omega-Aminocarbonsäure mit mindestens 9 Kohlenstoffatomen,
oder eines Diamin und einer Disaüre, dass Diamin oder Disaüre mit mindestens 9 Kohlenstoffatomen ergeben
es sich bei den Polyamiden um mikrokristalline Polyamide handelt,
worin es sich bei den mikrokristallinen Polyamiden um diejenigen mit einer Tg (Glasübergangstemperatur) zwischen 40°C und 90°C, einer Tm (Schmelztemperatur) zwischen 150°C und 200°C, einem Kristallinitätsgrad von mehr als 10% (1. DSC-Erhitzen gemäß ISO 11357 mit 40°C/min) und einer Schmelzenthalpie > 25 J/g (1. DSC-Erhitzen gemäß ISO 11357 mit 40°C/min) handelt,
- eine untere Schicht, die in der Hitze oder in der Schmelze chemisch oder physikalisch auf dem Substrat haftet,
- gegebenenfalls eine intermediäre Schicht (die auch als zentrale Schicht bezeichnet wird) aus Bindemittel, die zwischen der oberen Schicht und der unteren Schicht angeordnet ist,
und dadurch, daß sich die Schmelz- oder Glasübergangstemperaturen der verschiedenen Schichten um höchstens 25 bis 50°C unterscheiden, damit die Struktur unter der Wirkung der Temperatur leicht geformt werden kann, insbesondere durch Thermoformen oder Formen beim Überspritzen.

2. Struktur nach Anspruch 1, worin es sich bei den mikrokristallinen Polyamiden um eine transparente Zusammensetzung handelt, umfassend, bezogen auf das Gewicht, wobei sich die Summe auf 100% beläuft:
- 5 bis 40% eines amorphen Polyamids (B), das sich aus der Kondensation:
entweder mindestens eines unter cycloaliphatischen Diaminen und aliphatischen Diaminen ausgewählten Diamins und mindestens einer unter cycloaliphatischen Disäuren und aliphatischen Disäuren ausgewählten Disäure, wobei mindestens eine dieser Diamin- oder Disäure-Einheiten cycloaliphatisch ist,
oder einer cycloaliphatischen alpha,omega-Aminocarbonsäure
oder einer Kombination dieser beiden Möglichkeiten
und gegebenenfalls mindestens eines Monomers, das unter alpha,omega-Aminocarbonsäuren oder den eventuellen entsprechenden Lactamen, aliphatischen Disäuren und aliphatischen Diaminen ausgewählt ist, ergibt,
- 0 bis 40% eines flexiblen Polyamids (C), ausgewählt unter Copolymeren mit Polyamidblöcken und Polyetherblöcken und Copolyamiden,
- 0 bis 20% eines Verträglichkeitsvermittlers (D) für (A) und (B),
- 0 bis 40% eines flexiblen Modifizierungsmittels (M),
- mit der Maßgabe, daß (C)+(D)+(M) zwischen 0 und 50% liegt,
- Rest auf 100% teilkristallines Polyamid (A).

3. Struktur nach Anspruch 1, worin es sich bei den mikrokristallinen Polyamiden um eine transparente Zusammensetzung handelt, umfassend, bezogen auf das Gewicht, wobei sich die Summe auf 100% beläuft:
- 5 bis 40% eines amorphen Polyamids (B), das sich im wesentlichen aus der Kondensation mindestens eines gegebenenfalls cycloaliphatischen Diamins, mindestens einer aromatischen Disäure und gegebenenfalls mindestens eines unter alpha,omega-Aminocarbonsäuren, aliphatischen Disäuren und aliphatischen Diaminen ausgewählten Monomers ergibt;
- 0 zu 40% eines flexiblen Polyamids (C), ausgewählt aus Copolymeren mit Polyamidblöcken und Polyetherblöcken und Copolyamiden,
- 0 bis 20% eines Verträglichkeitsvermittlers (D) für (A) und (B),
- (C)+(D) zwischen 2 und 50% liegt,
- mit der Maßgabe, daß (B)+(C)+(D) nicht kleiner als 30% ist, Rest auf 100% teilkristallines Polyamid (A).

4. Struktur nach Anspruch 2 oder 3, worin es sich bei dem Polyamid (A) um PA11 oder PA12 handelt.

5. Struktur nach einem der vorhergehenden Ansprüche, worin die Polyamide der oberen Schicht so beschaffen sind, daß das [NH₂]/[COOH]-Kettenendenverhältnis > 1 ist.

6. Struktur nach einem der Ansprüche 1 bis 5, worin sich die Schmelz- oder Glasübergangstemperaturen der verschiedenen Schichten um höchstens 25 bis 50°C unterscheiden, damit die Struktur in der Hitze beim Thermoformvorgang leicht geformt werden kann.

7. Gegenstand aus einem Substrat, das mit der Struktur nach einem der vorhergehenden Ansprüche bedeckt ist, wobei die innere Schicht der Struktur neben dem Substrat angeordnet ist, **dadurch gekennzeichnet, daß** es sich bei dem Substrat um PP (Polypropylen), PA6 oder PA6,6 oder Styrolpolymer handelt.

8. Gegenstand nach Anspruch 7, **dadurch gekennzeichnet, daß** der Träger aus mit Glasfasern oder anorganischen Füllstoffen verstärktem Polypropylen, PA6 oder Styrolpolymer ist.

## Claims

1. A multilayer structure based on polyamides and intended to be fastened to a substrate, said substrate being made of polypropylene, or made of PA-6 or PA-6,6, or made of a styrene polymer such as ABS, **characterized in that** said multilayer structure comprises in succession:
- an upper layer made of transparent polyamides, i.e. having a transparency of 50% or higher, advantageously of 80% or higher, light transmission on an object 2 mm in thickness at a wavelength of 560 nm (cf ISO 13468),
the polyamides result from the condensation:
either a lactam or a α,Ω-aminocarboxylic acid having at least 9 carbon atoms,
or a diamine and a diacid, at least one of these having at least 9 carbon atoms,
the polyamides being microcrystalline polyamides,
the microcrystalline polyamides being those whose Tg (glass transition temperature) is between 40°C and 90°C and whose T ₘ (melting point) is between 150 °C and 200 °C, whose degree of crystallinity is greater than 10% (1st DSC heating according to ISO 11357 at 40°C/min) and whose melting enthalpy is greater than 25 J/g (1st DSC heating according to ISO 11357 at 40°C/min),
- a lower layer capable of adhering in the hot or melt state, chemically or physically to said substrate,
- optionally, an intermediate tie layer (also called a central layer) between the upper layer and the lower layer,
and **in that** the melting points or glass transition temperatures of the various layers differ by at most 25 to 50°C to allow the structure to be easily formed under the effect of the temperature, namely by thermoforming or by forming during the overmoulding.

2. Structure according to Claim 1, in which the microcrystalline polyamides have a transparent composition comprising, by weight, the total being 100%:
- 5 to 40% of an amorphous polyamide (B) that results essentially from the condensation:
either of at least one diamine chosen from cycloaliphatic diamines and aliphatic diamines and of at least one diacid, chosen from cycloaliphatic diacids and aliphatic diacids, at least one of these diamine or diacid units being cycloaliphatic,
or of a cycloaliphatic α,Ω-aminocarboxylic acid,
or of a combination of these two possibilities and,
optionally of at least one monomer chosen from α,Ω-aminocarboxylic acids or the possible corresponding lactams, aliphatic diacids and aliphatic diamines;
- 0 to 40% of a flexible polyamide (C) chosen from copolymers having polyamide blocks and polyether blocks, and copolyamides;
- 0 to 20% of a compatibilizer (D) for (A) and (B);
- 0 to 40% of a flexible modifier (M);
- with the condition that (C)+(D)+(M) is between 0 and 50%;
- the remainder to 100% of a semicrystalline polyamide (A).

3. Structure according to Claim 1, in which the microcrystalline polyamides have a transparent composition comprising, by weight, the total being 100%:
- 5 to 40% of an amorphous polyamide (B) that results essentially from the condensation of at least one optionally cycloaliphatic diamine, of at least one aromatic diacid and optionally of at least one monomer chosen from : α,Ω-aminocarboxylic acids, aliphatic diacids, aliphatic diamines;
- 0 to 40% of a flexible polymer (C) chosen from copolymers having polyamide blocks and polyether blocks, and copolyamides;
- 0 to 20% of a compatibilizer (D) for (A) and (B),
- (C)+(D) is between 2 and 50%;
- with the condition that (B)+(C)+(D) is not less than 30%, the balance to 100% of a semicrystalline polyamide (A).

4. Structure according to Claim 2 or 3, in which the polyamide (A) is PA11 or PA12.

5. Structure according to any one of the preceding claims, in which the polyamides of the upper layer are such that the [NH₂]/[COOH] chain end ratio is greater than 1.

6. Structure according to any one of Claims 1 to 5, in which the melting points or glass transition temperatures of the various layers differ by at most 25 to 50°C to allow the structure to be easily formed when hot, during the thermoforming operation.

7. Object formed from a substrate covered with the structure according to any one of the preceding claims, the lower layer being placed against the substrate, **characterized in that** the substrate is either made of PP (polypropylene), or made of PA6 or PA6,6 or made of a styrene polymer.

8. Object according to Claim 7, **characterized in that** the substrate is made of polypropylene, or made of PA6 or made of a styrene polymer reinforced by glass fibres or mineral fillers
